# EUROPEAN PATENT APPLICATION

(11) **EP 4 191 204 A1**
(43) Date of publication of application: **07.06.2023**
(21) Application number: 21848695.9
(22) Date of filing: 29.07.2021
(51) Int. Cl.: G01C 21/36, G01C 25/00, G06K 9/00, G06T 17/05, G06T 19/00, G02B 27/01

(54) **ROUTE GUIDANCE DEVICE AND ROUTE GUIDANCE METHOD THEREOF**

(30) Priority: 30.07.2020 US 202063058510 P
(71) Applicant: LG Electronics Inc., Yeongdeungpo-Gu Seoul 07336 (KR)
(72) Inventor: LEE, Kihyung, Seoul 06772 (KR); JUNG, Junyoung, Seoul 06772 (KR); JI, Aettie, Seoul 06772 (KR)
(74) Representative: Vossius & Partner Patentanwälte Rechtsanwälte mbB
(86) International application number: PCT/KR2021/009938
(87) International publication number: WO 2022/025689

(57) **Abstract**

The present invention provides a route guidance device mounted on a vehicle to implement augmented reality, and a route guidance method thereof. A route guidance device, according to one embodiment of the present invention, comprises: a communication unit that receives a first image captured through a camera; and a processor that performs calibration on the first image, overlaps a graphic object for guiding driving of the vehicle on a second image obtained by the calibration, and outputs same.

## Description

### Technical Field

The present disclosure relates to a route guidance device mounted in a vehicle to realize augmented reality (AR) and a route guidance method thereof.

### Background Art

A vehicle refers to means of transporting people or goods by using kinetic energy. Representative examples of vehicles include automobiles and motorcycles.

For safety and convenience of a user who uses the vehicle, various sensors and devices are provided in the vehicle, and functions of the vehicle are diversified.

The functions of the vehicle may be divided into a convenience function for promoting driver's convenience, and a safety function for enhancing safety of the driver and/or pedestrians.

First, the convenience function has a development motive associated with the driver's convenience, such as providing infotainment (information + entertainment) to the vehicle, supporting a partially autonomous driving function, or helping the driver ensuring a field of vision at night or at a blind spot. For example, the convenience functions may include various functions, such as an active cruise control (ACC), a smart parking assist system (SPAS), a night vision (NV), a head up display (HUD), an around view monitor (AVM), an adaptive headlight system (AHS), and the like.

The safety function is a technique of ensuring safeties of the driver and/or pedestrians, and may include various functions, such as a lane departure warning system (LDWS), a lane keeping assist system (LKAS), an autonomous emergency braking (AEB), and the like.

In order to further improve the convenience functions and the safety functions, a vehicle-specific communication technology is being developed. For example, a vehicle to infrastructure (V2I) that enables communication between a vehicle and an infrastructure, a Vehicle to Vehicle (V2V) that enables communication between vehicles, a Vehicle to Everything (V2X) that enables communication between a vehicle and an object, and the like.

A vehicle is provided with a route guidance device for visually providing various information to a passenger (driver). The route guidance device includes a head-up display (HUD) that outputs information to a windshield of the vehicle or a separately provided transparent screen and/or various displays that output information through panels.

The route guidance device provides route guidance information related to a route up to a destination and information related to a point of interest (POI), and is evolving toward effectively providing a variety of information. In particular, researches are ongoing on a route guidance device that directly and effectively provides necessary information to a driver who needs to concentrate on driving within a range that does not interfere with driving.

### Disclosure of Invention

### Technical Problem

The present disclosure is directed to solving the aforementioned problems and other drawbacks.

One aspect of the present disclosure is to provide a route guidance device capable of optimally providing a route for a vehicle to travel in augmented reality, and a route guidance method thereof.

Another aspect of the present disclosure is to provide a route guidance device capable of providing a variety of information to passengers in augmented reality, and a route guidance method thereof.

Still another aspect of the present disclosure is to provide a route guidance device capable of guiding a driving route (travel route) of a vehicle in augmented reality optimized depending on a situation in which the vehicle is traveling.

### Solution to Problem

The present disclosure describes a route guidance device for providing a route for a vehicle to travel, and a route guidance method thereof.

A route guidance device according to one embodiment of the present disclosure may include a communication unit configured to receive a first image photographed by a camera, and a processor configured to perform calibration on the first image and output a graphic object for guiding driving of a vehicle to overlap a second image obtained by the calibration.

In an embodiment, the processor may output a first graphic object related to driving on the first image before the calibration is performed, and output the first graphic object and a second graphic object related to driving to overlap the second image after the calibration is performed.

In an embodiment, the first graphic object may include turn-by-turn information indicating a road to enter at a predetermined distance ahead, and the second graphic object may include a carpet image that overlaps a lane included in the second image and guides a scheduled driving route of the vehicle.

In an embodiment, the processor may output the second graphic object to overlap a lane, on which the vehicle is traveling, of a plurality of lanes included in the second image, and may not output the second graphic object when it is determined that the vehicle departs from the lane on which the vehicle is traveling.

In an embodiment, the output of the first graphic object may be maintained regardless of whether the vehicle departs from the lane on which the vehicle is traveling.

In an embodiment, the processor may perform the calibration so that a road area included in the first image is larger than or equal to a predetermined size.

In an embodiment, when a viewing angle of the second image is changed due to driving of the vehicle so that a lane included in the second image and a graphic object overlapped on the lane do not match each other, the processor may change the graphic object to match the lane based on the second image with the changed viewing angle.

In an embodiment, the processor may output a carpet image, which overlaps a lane included in the second image and guides a scheduled driving route of the vehicle, on the second image, the carpet image may overlap a lane, on which the vehicle is traveling in the second image, and the processor may output a wall image guiding a driving direction to a lane adjacent to the lane, on which the vehicle is traveling in the second image.

In an embodiment, the processor may output the carpet image on the lane on which the vehicle is traveling at a predetermined distance before entering an intersection where the vehicle needs to change a direction, and change the carpet image to the wall image and output the wall image to overlap a lane adjacent to the lane on which the vehicle is traveling, when the vehicle enters within the predetermined distance based on the intersection.

In an embodiment, the processor may change the wall image to the carpet image and output the carpet image to overlap the lane on which the vehicle is traveling, when the vehicle changes the direction at the intersection.

In an embodiment, the processor may enlarge an output size of the wall image as a distance between the vehicle and the intersection decreases.

In an embodiment, the processor may output a compass image to overlap the second image, and here the compass image may include a compass object indicating a direction that the front of the vehicle is heading.

In an embodiment, the compass image may include a static carpet image for guiding a direction in which the vehicle should travel at a current location.

In an embodiment, the processor may vary a display location of the static carpet image along a rim of the compass object.

In an embodiment, the processor may output any one of a carpet image guiding a scheduled driving route of the vehicle or a compass image indicating a direction that the front of the vehicle is heading, based on a distance between the vehicle and the intersection at which the vehicle has to change a direction.

In an embodiment, the processor may determine a slope of a road on which the vehicle is traveling, and determine a slope of the first graphic object, which is output to overlap the first image, based on the determined slope of the road.

A route guidance method for a route guidance device according to another embodiment of the present disclosure may include receiving a first image photographed by a camera, and performing calibration on the first image and outputting a graphic object for guiding driving of a vehicle to overlap a second image obtained by the calibration.

In an embodiment, the outputting may be configured to output a first graphic object related to driving on the first image before the calibration is performed, and output the first graphic object and a second graphic object related to driving to overlap the second image after the calibration is performed.

In an embodiment, the first graphic object may include turn-by-turn information indicating a road to enter at a predetermined distance ahead, and the second graphic object may include a carpet image that overlaps a lane included in the second image and guides a scheduled driving route of the vehicle.

In an embodiment, the outputting may be configured to output the second graphic object to overlap a lane, on which the vehicle is traveling, of a plurality of lanes included in the image, and not to output the second graphic object when it is determined that the vehicle departs from the lane on which the vehicle is traveling.

### Advantageous Effects of Invention

Hereinafter, effects of a route guidance device and a route guidance method therefor according to the present disclosure will be described.

According to the present disclosure, a passenger may be provided with information on a route, on which the vehicle autonomously drives or on which a driver should drive in units of lanes, through a carpet image.

In addition, according to the present disclosure, a passenger can determine a route on which a vehicle should travel in an optimized way through images of various types of carpets.

In addition, according to the present disclosure, the present disclosure can provide a new route guidance interface capable of guiding a driving route of a vehicle through a compass image.

### Brief Description of Drawings

FIG. 1 is a view illustrating appearance of a vehicle in accordance with an embodiment of the present disclosure.
FIG. 2 is a diagram illustrating appearance of a vehicle at various angles in accordance with an embodiment of the present disclosure.
FIGS. 3 and 4 are diagrams illustrating an inside of the vehicle in accordance with the embodiment.
FIGS. 5 and 6 are diagrams illustrating objects.
FIG. 7 is a block diagram referred for explaining a vehicle according to an embodiment.
FIG. 8 is a block diagram of a mobile terminal in accordance with the present disclosure.
FIG. 9 is a block diagram illustrating a route guidance device in accordance with the present disclosure.
FIGS. 10A, 10B, 10C, 10D, 10E, 10F, 11A, 11B, 11C, 11D, 11E, 11F, and 11G are conceptual views illustrating a route guidance method to which augmented reality is applied, in accordance with one embodiment of the present disclosure.
FIGS. 12, 13A, and 13B are flowcharts for explaining a method of determining a type of an image output in augmented reality according to a driving state of a vehicle in accordance with one embodiment of the present disclosure.
FIGS. 14, 15, 16, 17, 18, 19, 20, 21, 22, and 23 are conceptual views each illustrating a compass image output in augmented reality in accordance with one embodiment of the present disclosure.
FIGS. 24A, 24B, 25, 26, 27A, and 27B are conceptual views illustrating a route guidance method in accordance with another embodiment of the present disclosure.
FIG. 28 is a conceptual view illustrating a method of outputting turn-by-turn information in accordance with one embodiment of the present disclosure.
FIGS. 29A, 29B, 29C, and 29D are conceptual views illustrating various methods of outputting a compass image in accordance with one embodiment of the present disclosure.
FIGS. 30, 31, and 32 are conceptual views illustrating a route guidance method to which augmented reality is applied according to the present disclosure.

### Mode for the Invention

Description will now be given in detail according to one or more embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, if a detailed explanation for a related known function or construction is considered to unnecessarily divert the gist of the present disclosure, such explanation has been omitted but would be understood by those skilled in the art. The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A vehicle according to an implementation of the present disclosure may be understood as a conception including cars, motorcycles and the like. Hereinafter, the vehicle will be described based on a car.

The vehicle according to the implementation of the present disclosure may be a conception including all of an internal combustion engine car having an engine as a power source, a hybrid vehicle having an engine and an electric motor as power sources, an electric vehicle having an electric motor as a power source, and the like.

In the following description, a left side of a vehicle refers to a left side in a driving direction of the vehicle, and a right side of the vehicle refers to a right side in the driving direction.

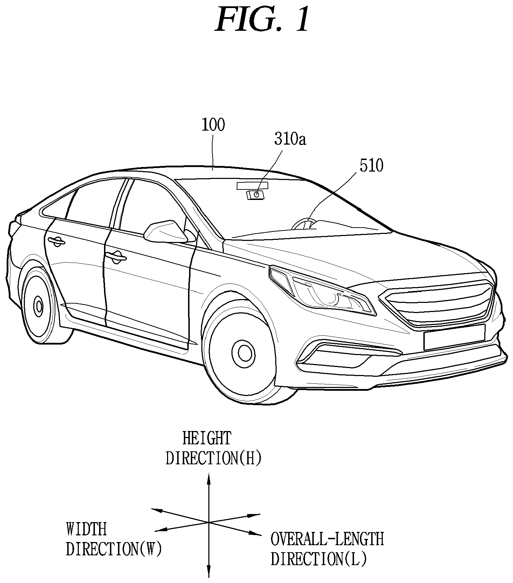

FIG. 1 is a view illustrating appearance of a vehicle in accordance with an embodiment of the present disclosure.

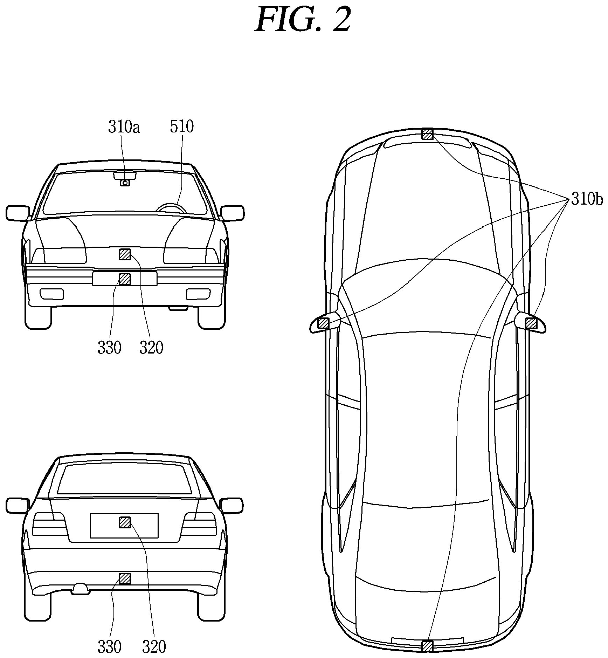

FIG. 2 is a diagram illustrating appearance of a vehicle at various angles in accordance with an embodiment of the present disclosure.

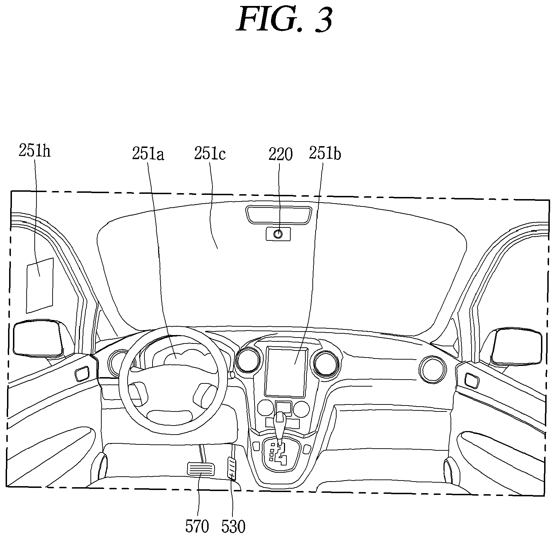

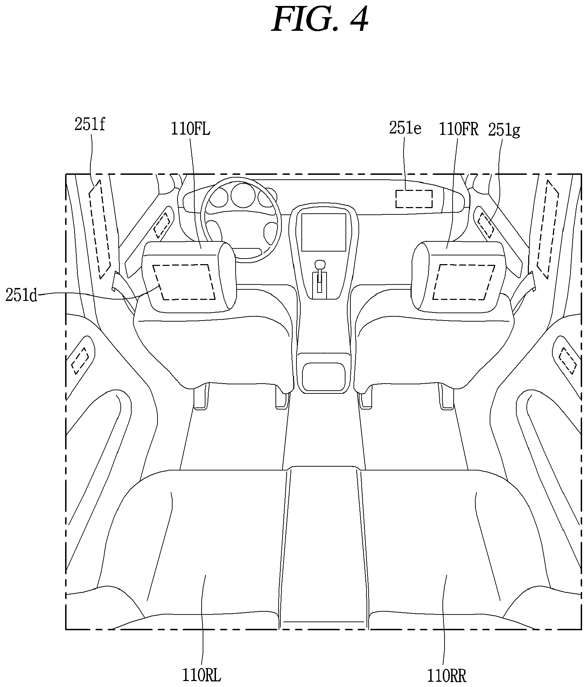

FIGS. 3 and 4 are diagrams illustrating an inside of the vehicle in accordance with the embodiment.

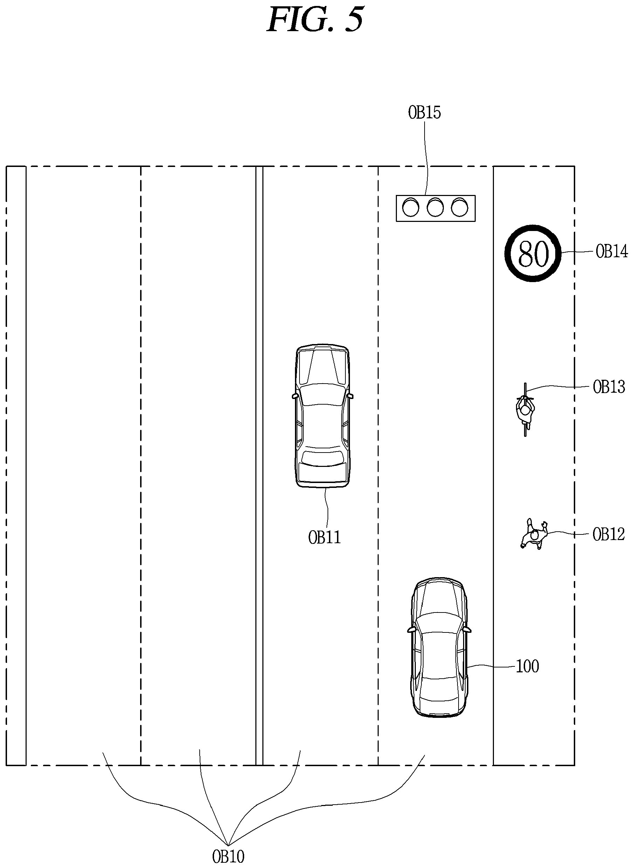

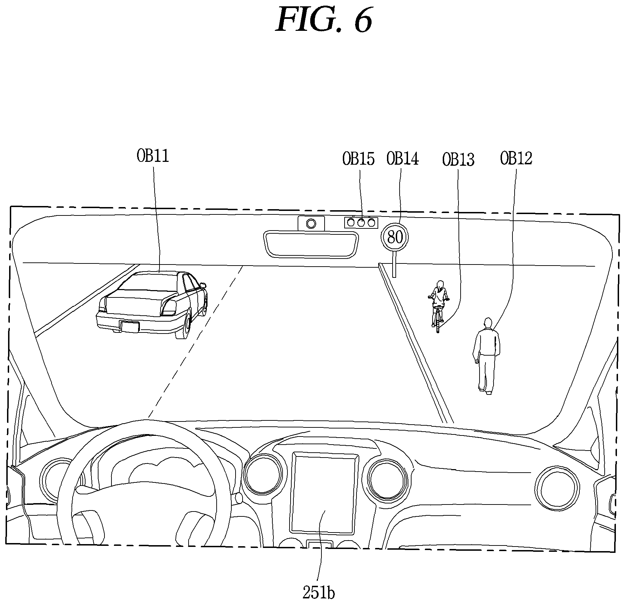

FIGS. 5 and 6 are diagrams illustrating objects.

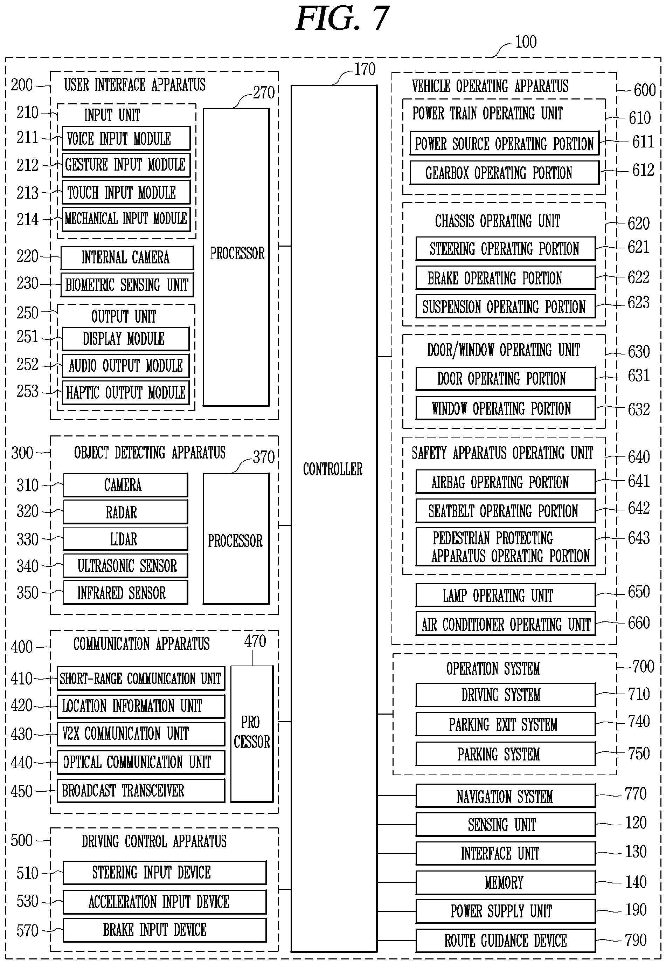

FIG. 7 is a block diagram referred for explaining a vehicle according to an embodiment.

As illustrated in FIG. 1 to 7, a vehicle 100 may include wheels turning by a driving force, and a steering input device 510 for adjusting a driving (ongoing, moving) direction of the vehicle 100.

The vehicle 100 may be an autonomous vehicle.

In some implementations, the vehicle 100 may be switched into an autonomous (driving) mode or a manual mode based on a user input.

For example, the vehicle may be switched from the manual mode into the autonomous mode or from the autonomous mode into the manual mode based on a user input received through a user interface device 200.

The vehicle 100 may be switched into the autonomous mode or the manual mode based on driving environment information. The driving environment information may be generated based on object information provided from an object detection device 300.

For example, the vehicle 100 may be switched from the manual mode into the autonomous mode or from the autonomous module into the manual mode based on driving environment information generated in the object detection device 300.

In an example, the vehicle 100 may be switched from the manual mode into the autonomous mode or from the autonomous mode into the manual mode based on driving environment information received through a communication device 400.

The vehicle 100 may be switched from the manual mode into the autonomous mode or from the autonomous mode into the manual mode based on information, data or signal provided from an external device.

When the vehicle 100 is driven in the autonomous mode, the autonomous vehicle 100 may be driven based on an operation system 700.

For example, the autonomous vehicle 100 may be driven based on information, data or signals generated in a driving system 710, a parking exit system 740 and a parking system 750.

When the vehicle 100 is driven in the manual mode, the autonomous vehicle 100 may receive a user input for driving through a driving control device 500. The vehicle 100 may be driven based on the user input received through the driving control device 500.

An overall length refers to a length from a front end to a rear end of the vehicle 100, a width refers to a width of the vehicle 100, and a height refers to a length from a bottom of a wheel to a roof. In the following description, an overall-length direction L may refer to a direction which is a criterion for measuring the overall length of the vehicle 100, a width direction W may refer to a direction that is a criterion for measuring a width of the vehicle 100, and a height direction H may refer to a direction that is a criterion for measuring a height of the vehicle 100

As illustrated in FIG. 7, the vehicle 100 may include a user interface device 200, an object detection device 300, a communication device 400, a driving control device 500, a vehicle operation device 600, an operation system 700, a navigation system 770, a sensing unit 120, an interface unit 130, a memory 140, a controller 170 and a power supply unit 190.

In some implementations, the vehicle 100 may include more components in addition to components to be explained in this specification or may not include some of those components to be explained in this specification.

The user interface device 200 is a device for communication between the vehicle 100 and a user. The user interface device 200 may receive a user input and provide information generated in the vehicle 100 to the user. The vehicle 200 may implement user interfaces (Uls) or user experiences (UXs) through the user interface device 200.

The user interface device 200 may include an input unit 210, an internal camera 220, a biometric sensing unit 230, an output unit 250 and at least one processor, such as processor 270.

In some implementations, the user interface device 200 may include more components in addition to components to be explained in this specification or may not include some of those components to be explained in this specification.

The input unit 200 may allow the user to input information. Data collected in the input unit 120 may be analyzed by the processor 270 and processed as a user's control command.

The input unit 200 may be disposed inside the vehicle. For example, the input unit 200 may be disposed on one region of a steering wheel, one region of an instrument panel, one region of a seat, one region of each pillar, one region of a door, one region of a center console, one region of a headlining, one region of a sun visor, one region of a windshield, one region of a window, or the like.

The input unit 200 may include a voice input module 211, a gesture input module 212, a touch input module 213, and a mechanical input module 214.

The audio input module 211 may convert a user's voice input into an electric signal. The converted electric signal may be provided to the processor 270 or the controller 170.

The audio input module 211 may include at least one microphone.

The gesture input module 212 may convert a user's gesture input into an electric signal. The converted electric signal may be provided to the processor 270 or the controller 170.

The gesture input module 212 may include at least one of an infrared sensor and an image sensor for detecting the user's gesture input.

In some implementations, the gesture input module 212 may detect a user's three-dimensional (3D) gesture input. To this end, the gesture input module 212 may include a light emitting diode outputting a plurality of infrared rays or a plurality of image sensors.

The gesture input module 212 may detect the user's 3D gesture input by a time of flight (TOF) method, a structured light method or a disparity method.

The touch input module 213 may convert the user's touch input into an electric signal. The converted electric signal may be provided to the processor 270 or the controller 170.

The touch input module 213 may include a touch sensor for detecting the user's touch input.

In some implementations, the touch input module 213 may be integrated with the display module 251 so as to implement a touch screen. The touch screen may provide an input interface and an output interface between the vehicle 100 and the user.

The mechanical input module 214 may include at least one of a button, a dome switch, a jog wheel and a jog switch. An electric signal generated by the mechanical input module 214 may be provided to the processor 270 or the controller 170.

The mechanical input module 214 may be arranged on a steering wheel, a center fascia, a center console, a cockpit module, a door and the like.

The internal camera 220 may acquire an internal image of the vehicle. The processor 270 may detect a user's state based on the internal image of the vehicle. The processor 270 may acquire information related to the user's gaze from the internal image of the vehicle. The processor 270 may detect a user gesture from the internal image of the vehicle.

The biometric sensing unit 230 may acquire the user's biometric information. The biometric sensing unit 230 may include a sensor for detecting the user's biometric information and acquire fingerprint information and heart rate information regarding the user using the sensor. The biometric information may be used for user authentication.

The output unit 250 may generate an output related to a visual, audible or tactile signal.

The output unit 250 may include at least one of a display module 251, an audio output module 252 and a haptic output module 253.

The display module 251 may output graphic objects corresponding to various types of information.

The display module 251 may include at least one of a liquid crystal display (LCD), a thin film transistor-LCD (TFT LCD), an organic light-emitting diode (OLED), a flexible display, a three-dimensional (3D) display and an e-ink display.

The display module 251 may be inter-layered or integrated with a touch input module 213 to implement a touch screen.

The display module 251 may be implemented as a head up display (HUD). When the display module 251 is implemented as the HUD, the display module 251 may be provided with a projecting module so as to output information through an image which is projected on a windshield or a window.

The display module 251 may include a transparent display. The transparent display may be attached to the windshield or the window.

The transparent display may have a predetermined degree of transparency and output a predetermined screen thereon. The transparent display may include at least one of a thin film electroluminescent (TFEL), a transparent OLED, a transparent LCD, a transmissive transparent display, and a transparent LED display. The transparent display may have adjustable transparency.

Meanwhile, the user interface apparatus 200 may include a plurality of display modules 251a to 251g.

The display module 251 may be disposed on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The audio output module 252 converts an electric signal provided from the processor 270 or the controller 170 into an audio signal for output. To this end, the audio output module 252 may include at least one speaker.

The haptic output module 253 generates a tactile output. For example, the haptic output module 253 may vibrate the steering wheel, a safety belt, a seat 110FL, 110FR, 110RL, 110RR such that the user can recognize such output.

The processor 270 may control an overall operation of each unit of the user interface apparatus 200.

In some implementations, the user interface device 200 may include a plurality of processors 270 or may not include any processor 270.

When the processor 270 is not included in the user interface device 200, the user interface device 200 may operate according to a control of a processor of another apparatus within the vehicle 100 or the controller 170.

In some examples, the user interface device 200 may be called as a display device for vehicle.

The user interface device 200 may operate according to the control of the controller 170.

The object detection device 300 is a device for detecting an object located at outside of the vehicle 100.

The object may be a variety of objects associated with driving (operation) of the vehicle 100.

Referring to FIGS. 5 and 6, an object O may include a traffic lane OB10, another vehicle OB11, a pedestrian OB12, a two-wheeled vehicle OB13, traffic signals OB14 and OB15, light, a road, a structure, a speed hump, a terrain, an animal and the like.

The lane OB10 may be a driving lane, a lane next to the driving lane or a lane on which another vehicle comes in an opposite direction to the vehicle 100. The lanes OB10 may be a concept including left and right lines forming a lane.

The another vehicle OB11 may be a vehicle which is moving around the vehicle 100. The another vehicle OB11 may be a vehicle located within a predetermined distance from the vehicle 100. For example, the another vehicle OB11 may be a vehicle which moves before or after the vehicle 100.

The pedestrian OB12 may be a person located near the vehicle 100. The pedestrian OB12 may be a person located within a predetermined distance from the vehicle 100. For example, the pedestrian OB12 may be a person located on a sidewalk or roadway.

The two-wheeled vehicle OB12 may refer to a vehicle (transportation facility) that is located near the vehicle 100 and moves using two wheels. The two-wheeled vehicle OB12 may be a vehicle that is located within a predetermined distance from the vehicle 100 and has two wheels. For example, the two-wheeled vehicle OB13 may be a motorcycle or a bicycle that is located on a sidewalk or roadway.

The traffic signals may include a traffic light OB15, a traffic sign OB14 and a pattern or text drawn on a road surface.

The light may be light emitted from a lamp provided on another vehicle. The light may be light generated from a streetlamp. The light may be solar light.

The road may include a road surface, a curve, an upward slope, a downward slope and the like.

The structure may be an object that is located near a road and fixed on the ground. For example, the structure may include a streetlamp, a roadside tree, a building, an electric pole, a traffic light, a bridge and the like.

The terrain may include a mountain, a hill and the like.

Meanwhile, objects may be classified into a moving object and a fixed object. For example, the moving object may include another vehicle or a pedestrian. The fixed objects may conceptually include traffic signals, roads, and structures, for example.

The object detection device 300 may include a camera 310, a radar 320, a LiDAR 330, an ultrasonic sensor 340, an infrared sensor 350, and a processor 370.

In some implementations, the object detection device 300 may further include other components in addition to the components described, or may not include some of the components described.

The camera 310 may be located on an appropriate portion outside the vehicle to acquire an external image of the vehicle. The camera 310 may be a mono camera, a stereo camera 310a, an around view monitoring (AVM) camera 310b or a 360-degree camera.

For example, the camera 310 may be disposed adjacent to a front windshield within the vehicle to acquire a front image of the vehicle. Or, the camera 310 may be disposed adjacent to a front bumper or a radiator grill.

For example, the camera 310 may be disposed adjacent to a rear glass within the vehicle to acquire a rear image of the vehicle. Or, the camera 310 may be disposed adjacent to a rear bumper, a trunk or a tail gate.

For example, the camera 310 may be disposed adjacent to at least one of side windows within the vehicle to acquire a side image of the vehicle. Or, the camera 310 may be disposed adjacent to a side mirror, a fender or a door.

The camera 310 may provide an acquired image to the processor 370.

The radar 320 may include electric wave transmitting and receiving portions. The radar 320 may be implemented as a pulse radar or a continuous wave radar according to a principle of emitting electric waves. The radar 320 may be implemented in a frequency modulated continuous wave (FMCW) manner or a frequency shift Keyong (FSK) manner according to a signal waveform, among the continuous wave radar methods.

The radar 320 may detect an object in a time of flight (TOF) manner or a phase-shift manner through the medium of the electric wave, and detect a position of the detected object, a distance from the detected object and a relative speed with the detected object.

The radar 320 may be disposed on an appropriate position outside the vehicle for detecting an object which is located at a front, rear or side of the vehicle.

The LiDAR 330 may include laser transmitting and receiving portions. The LiDAR 330 may be implemented in a time of flight (TOF) manner or a phase-shift manner.

The LiDAR 330 may be implemented as a drive type or a non-drive type.

For the drive type, the LiDAR 330 may be rotated by a motor and detect object near the vehicle 100.

For the non-drive type, the LiDAR 330 may detect, through light steering, objects which are located within a predetermined range based on the vehicle 100. The vehicle 100 may include a plurality of non-drive type LiDARs 330.

The LiDAR 330 may detect an object in a TOP manner or a phase-shift manner through the medium of a laser beam, and detect a position of the detected object, a distance from the detected object and a relative speed with the detected object.

The LiDAR 330 may be disposed on an appropriate position outside the vehicle for detecting an object located at the front, rear or side of the vehicle.

The ultrasonic sensor 340 may include ultrasonic wave transmitting and receiving portions. The ultrasonic sensor 340 may detect an object based on an ultrasonic wave, and detect a position of the detected object, a distance from the detected object and a relative speed with the detected object.

The ultrasonic sensor 340 may be disposed on an appropriate position outside the vehicle for detecting an object located at the front, rear or side of the vehicle.

The infrared sensor 350 may include infrared light transmitting and receiving portions. The infrared sensor 340 may detect an object based on infrared light, and detect a position of the detected object, a distance from the detected object and a relative speed with the detected object.

The infrared sensor 350 may be disposed on an appropriate position outside the vehicle for detecting an object located at the front, rear or side of the vehicle.

The processor 370 may control an overall operation of each unit of the object detection device 300.

The processor 370 may detect an object based on an acquired image, and track the object. The processor 370 may execute operations, such as a calculation of a distance from the object, a calculation of a relative speed with the object and the like, through an image processing algorithm.

The processor 370 may detect an object based on a reflected electromagnetic wave which an emitted electromagnetic wave is reflected from the object, and track the object. The processor 370 may execute operations, such as a calculation of a distance from the object, a calculation of a relative speed with the object and the like, based on the electromagnetic wave.

The processor 370 may detect an object based on a reflected laser beam which an emitted laser beam is reflected from the object, and track the object. The processor 370 may execute operations, such as a calculation of a distance from the object, a calculation of a relative speed with the object and the like, based on the laser beam.

The processor 370 may detect an object based on a reflected ultrasonic wave which an emitted ultrasonic wave is reflected from the object, and track the object. The processor 370 may execute operations, such as a calculation of a distance from the object, a calculation of a relative speed with the object and the like, based on the ultrasonic wave.

The processor 370 may detect an object based on reflected infrared light which emitted infrared light is reflected from the object, and track the object. The processor 370 may execute operations, such as a calculation of a distance from the object, a calculation of a relative speed with the object and the like, based on the infrared light.

In some implementations, the object detection device 300 may include a plurality of processors 370 or may not include any processor 370. For example, each of the camera 310, the radar 320, the LiDAR 330, the ultrasonic sensor 340 and the infrared sensor 350 may include the processor in an individual manner.

When the processor 370 is not included in the object detection device 300, the object detection device 300 may operate according to the control of a processor of an apparatus within the vehicle 100 or the controller 170.

The object detection device 400 may operate according to the control of the controller 170.

The communication device 400 may be a device for performing communication with an external device. Here, the external device may be another vehicle, a mobile terminal or a server.

The communication device 400 may perform the communication by including at least one of a transmitting antenna, a receiving antenna, and a radio frequency (RF) circuit and an RF element in which various communication protocols are executable.

The communication device 400 may include a short-range communication unit 410, a location information unit 420, a V2X communication unit 430, an optical communication unit 440, a broadcast transceiver 450 and a processor 470.

According to an implementation, the communication device 400 may further include other components in addition to the components described, or may not include some of the components described.

The short-range communication unit 410 is a unit for facilitating short-range communications. Suitable technologies for implementing such short-range communications may include Bluetooth^{™}, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like.

The short-range communication unit 410 may construct short-range area networks to perform short-range communication between the vehicle 100 and at least one external device.

The location information unit 420 is a unit for acquiring position information. For example, the location information unit 420 may include a Global Positioning System (GPS) module or a Differential Global Positioning System (DGPS) module.

The V2X communication unit 430 is a unit for performing wireless communications with a server (Vehicle to Infra; V2I), another vehicle (Vehicle to Vehicle; V2V), or a pedestrian (Vehicle to Pedestrian; V2P). The V2X communication unit 430 may include an RF circuit in which protocols for communication with an infrastructure (V2I), communication between vehicles (V2V), and communication with a pedestrian (V2P) are executable.

The optical communication unit 440 is a unit for performing communication with an external device through the medium of light. The optical communication unit 440 may include an optical transmission part for converting an electric signal into an optical signal and transmitting the optical signal to the outside, and an optical reception part for converting the received optical signal into the electric signal.

In some implementations, the optical transmission part may be formed integrally with lamps provided on the vehicle 100.

The broadcast transceiver 450 may be a unit for receiving a broadcast signal from an external broadcast managing entity or transmitting a broadcast signal to the broadcast managing entity via a broadcast channel. The broadcast channel may include a satellite channel, a terrestrial channel, or both. The broadcast signal may include a TV broadcast signal, a radio broadcast signal, and a data broadcast signal.

The processor 470 may control an overall operation of each unit of the communication device 400.

In some implementations, the communication device 400 may include a plurality of processors 470 or may not include any processor 470.

When the processor 470 is not included in the communication device 400, the communication device 400 may operate according to the control of a processor of another device within the vehicle 100 or the controller 170.

In some examples, the communication device 400 may implement a display device for a vehicle together with the user interface device 200. In this instance, the display device for the vehicle may be referred to as a telematics apparatus or an Audio Video Navigation (AVN) apparatus.

The communication device 400 may operate according to the control of the controller 170.

The driving control device 500 is a device for receiving a user input for driving.

In a manual mode, the vehicle 100 may be operated based on a signal provided by the driving control device 500.

The driving control device 500 may include a steering input device 510, an acceleration input device 530 and a brake input device 570.

The steering input device 510 may receive an input regarding a driving (ongoing) direction of the vehicle 100 from the user. The steering input device 510 is preferably configured in the form of a wheel allowing a steering input in a rotating manner. In some implementations, the steering input device may also be configured in a shape of a touch screen, a touch pad or a button.

The acceleration input device 530 may receive an input for accelerating the vehicle 100 from the user. The brake input device 570 may receive an input for braking the vehicle 100 from the user. Each of the acceleration input device 530 and the brake input device 570 is preferably configured in the form of a pedal. In some implementations, the acceleration input device or the brake input device may also be configured in a shape of a touch screen, a touch pad or a button.

The driving control device 500 may operate according to the control of the controller 170.

The vehicle operation device 600 is a device for electrically controlling operations of various devices within the vehicle 100.

The vehicle operation device 600 may include a power train operating unit 610, a chassis operating unit 620, a door/window operating unit 630, a safety apparatus operating unit 640, a lamp operating unit 650, and an air-conditioner operating unit 660.

In some implementations, the vehicle operation device 600 may further include other components in addition to the components described, or may not include some of the components described.

In some examples, the vehicle operation device 600 may include a processor. Each unit of the vehicle operation device 600 may individually include a processor.

The power train operating unit 610 may control an operation of a power train device.

The power train operating unit 610 may include a power source operating portion 611 and a gearbox operating portion 612.

The power source operating portion 611 may perform a control for a power source of the vehicle 100.

For example, upon using a fossil fuel-based engine as the power source, the power source operating portion 611 may perform an electronic control for the engine. Accordingly, an output torque and the like of the engine can be controlled. The power source operating portion 611 may adjust the engine output torque according to the control of the controller 170.

For example, upon using an electric energy-based motor as the power source, the power source operating portion 611 may perform a control for the motor. The power source operating portion 611 may adjust a rotating speed, a torque and the like of the motor according to the control of the controller 170.

The gearbox operating portion 612 may perform a control for a gearbox.

The gearbox operating portion 612 may adjust a state of the gearbox. The gearbox operating portion 612 may change the state of the gearbox into drive (forward) (D), reverse (R), neutral (N) or parking (P).

In some examples, when an engine is the power source, the gearbox operating portion 612 may adjust a locked state of a gear in the drive (D) state.

The chassis operating unit 620 may control an operation of a chassis device.

The chassis operating unit 620 may include a steering operating portion 621, a brake operating portion 622 and a suspension operating portion 623.

The steering operating portion 621 may perform an electronic control for a steering apparatus within the vehicle 100. The steering operating portion 621 may change a driving direction of the vehicle.

The brake operating portion 622 may perform an electronic control for a brake apparatus within the vehicle 100. For example, the brake operating portion 622 may control an operation of brakes provided at wheels to reduce speed of the vehicle 100.

Meanwhile, the brake operating portion 622 may individually control each of a plurality of brakes. The brake operating portion 622 may differently control braking force applied to each of a plurality of wheels.

The suspension operating portion 623 may perform an electronic control for a suspension apparatus within the vehicle 100. For example, the suspension operating portion 623 may control the suspension apparatus to reduce vibration of the vehicle 100 when a bump is present on a road.

Meanwhile, the suspension operating portion 623 may individually control each of a plurality of suspensions.

The door/window operating unit 630 may perform an electronic control for a door apparatus or a window apparatus within the vehicle 100.

The door/window operating unit 630 may include a door operating portion 631 and a window operating portion 632.

The door operating portion 631 may perform the control for the door apparatus. The door operating portion 631 may control opening or closing of a plurality of doors of the vehicle 100. The door operating portion 631 may control opening or closing of a trunk or a tail gate. The door operating portion 631 may control opening or closing of a sunroof.

The window operating portion 632 may perform the electronic control for the window apparatus. The window operating portion 632 may control opening or closing of a plurality of windows of the vehicle 100.

The safety apparatus operating unit 640 may perform an electronic control for various safety apparatuses within the vehicle 100.

The safety apparatus operating unit 640 may include an airbag operating portion 641, a seatbelt operating portion 642 and a pedestrian protection apparatus operating portion 643.

The airbag operating portion 641 may perform an electronic control for an airbag apparatus within the vehicle 100. For example, the airbag operating portion 641 may control the airbag to be deployed upon a detection of a risk.

The seatbelt operating portion 642 may perform an electronic control for a seatbelt apparatus within the vehicle 100. For example, the seatbelt operating portion 642 may control passengers to be motionlessly seated in seats 110FL, 110FR, 110RL, 110RR using seatbelts upon a detection of a risk.

The pedestrian protection apparatus operating portion 643 may perform an electronic control for a hood lift and a pedestrian airbag. For example, the pedestrian protection apparatus operating portion 643 may control the hood lift and the pedestrian airbag to be open up upon detecting pedestrian collision.

The lamp operating unit 650 may perform an electronic control for various lamp apparatuses within the vehicle 100.

The air-conditioner operating unit 660 may perform an electronic control for an air conditioner within the vehicle 100. For example, the air-conditioner operating unit 660 may control the air conditioner to supply cold air into the vehicle when internal temperature of the vehicle is high.

The vehicle operation device 600 may include a processor. Each unit of the vehicle operation device 600 may individually include a processor.

The vehicle operation device 600 may operate according to the control of the controller 170.

The operation system 700 is a system that controls various driving modes of the vehicle 100. The operation system 700 may operate in an autonomous driving mode.

The operation system 700 may include a driving system 710, a parking exit system 740 and a parking system 750.

In some implementations, the operation system 700 may further include other components in addition to components to be described, or may not include some of the components to be described.

In some examples, the operation system 700 may include at least one processor. Each unit of the operation system 700 may individually include at least one processor.

In some implementations, the operation system may be implemented by the controller 170 when it is implemented in a software configuration.

Meanwhile, according to implementation, the operation system 700 may be a concept including at least one of the user interface device 200, the object detection device 300, the communication device 400, the vehicle operation device 600 and the controller 170.

The driving system 710 may perform driving of the vehicle 100.

The driving system 710 may receive navigation information from a navigation system 770, transmit a control signal to the vehicle operation device 600, and perform driving of the vehicle 100.

The driving system 710 may receive object information from the object detection device 300, transmit a control signal to the vehicle operation device 600 and perform driving of the vehicle 100.

The driving system 710 may receive a signal from an external device through the communication device 400, transmit a control signal to the vehicle operation device 600, and perform driving of the vehicle 100.

The parking exit system 740 may perform an exit of the vehicle 100 from a parking lot.

The parking exit system 740 may receive navigation information from the navigation system 770, transmit a control signal to the vehicle operating apparatus 600, and perform the exit of the vehicle 100 from the parking lot.

The parking exit system 740 may receive object information from the object detection device 300, transmit a control signal to the vehicle operation device 600 and perform the exit of the vehicle 100 from the parking lot.

The parking exit system 740 may receive a signal from an external device through the communication device 400, transmit a control signal to the vehicle operation device 600, and perform the exit of the vehicle 100 from the parking lot.

The parking system 750 may perform parking of the vehicle 100.

The parking system 750 may receive navigation information from the navigation system 770, transmit a control signal to the vehicle operation device 600, and park the vehicle 100.

The parking system 750 may receive object information from the object detection device 300, transmit a control signal to the vehicle operation device 600 and park the vehicle 100.

The parking system 750 may receive a signal from an external device through the communication device 400, transmit a control signal to the vehicle operation device 600, and park the vehicle 100.

The navigation system 770 may provide navigation information. The navigation information may include at least one of map information, information regarding a set destination, path information according to the set destination, information regarding various objects on a path, lane information and current location information of the vehicle.

The navigation system 770 may include a memory and a processor. The memory may store the navigation information. The processor may control an operation of the navigation system 770.

In some implementations, the navigation system 770 may update prestored information by receiving information from an external device through the communication apparatus 400.

In some implementations, the navigation system 770 may be classified as a sub component of the user interface device 200.

The sensing unit 120 may sense a status of the vehicle. The sensing unit 120 may include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing unit 120 may acquire sensing signals with respect to vehicle-related information, such as a posture, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing unit 120 may further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The interface unit 130 may serve as a path allowing the vehicle 100 to interface with various types of external devices connected thereto. For example, the interface unit 130 may be provided with a port connectable with a mobile terminal, and connected to the mobile terminal through the port. In this instance, the interface unit 130 may exchange data with the mobile terminal.

In some examples, the interface unit 130 may serve as a path for supplying electric energy to the connected mobile terminal. When the mobile terminal is electrically connected to the interface unit 130, the interface unit 130 supplies electric energy supplied from a power supply unit 190 to the mobile terminal according to the control of the controller 170.

The memory 140 is electrically connected to the controller 170. The memory 140 may store basic data for units, control data for controlling operations of units and input/output data. The memory 140 may be a variety of storage devices, such as ROM, RAM, EPROM, a flash drive, a hard drive and the like in a hardware configuration. The memory 140 may store various data for overall operations of the vehicle 100, such as programs for processing or controlling the controller 170.

In some implementations, the memory 140 may be integrated with the controller 170 or implemented as a sub component of the controller 170.

The controller 170 may control an overall operation of each unit of the vehicle 100. The controller 170 may be referred to as an Electronic Control Unit (ECU).

The power supply unit 190 may supply power required for an operation of each component according to the control of the controller 170. Specifically, the power supply unit 190 may receive power supplied from an internal battery of the vehicle, and the like.

At least one processor and the controller 170 included in the vehicle 100 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro controllers, microprocessors, and electric units performing other functions.

In some examples, the vehicle 100 may include a route guidance device 790.

The route guidance device 790 may control at least one of those components illustrated in FIG. 7. From this perspective, the route guidance device 790 may be the controller 170.

Without a limit to this, the route guidance device 790 may be a separate device, independent of the controller 170. That is, the route guidance device 790 may be implemented as a device or module independent of the vehicle 100. In this case, the route guidance device 790 may perform communication/interaction with one component of the vehicle 100 through a portion of the vehicle 100.

When the route guidance device 790 is implemented as a component independent of the controller 170, the route guidance device 790 may be provided/connected/mounted on a portion of the vehicle 100.

Hereinafter, a description will be given of an example in which the route guidance device 790 is a separate component independent of the controller 170, for the sake of explanation.

In the following description, functions (operations) and control methods described in relation to the route guidance device 790 may be executed by the controller 170 of the vehicle. That is, every detail described in relation to the route guidance device 790 may be applied to the controller 170 in the same/like manner.

Also, the route guidance device 790 described herein may include some of the components illustrated in FIG. 7 and various components included in the vehicle. For the sake of explanation, the components illustrated in FIG. 7 and the various components included in the vehicle will be described with separate names and reference numbers.

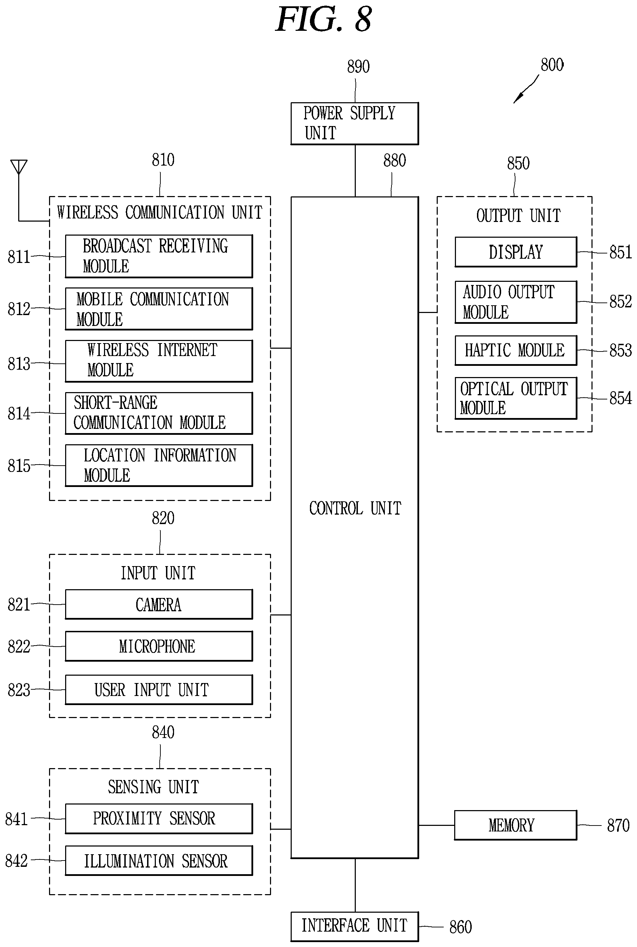

Meanwhile, the route guidance device 790 of the present disclosure may be the mobile terminal 800 illustrated in FIG. 8 or implemented as the mobile terminal 800. The mobile terminal 800 may perform communication with the vehicle 100 and may be a component independent of the vehicle 100.

Hereinafter, the mobile terminal 800, which is an embodiment of the route guidance device 790, will be described in detail.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, digital signages, and the like.

FIG. 8 is a block diagram of a mobile terminal in accordance with the present disclosure.

The mobile terminal 800 may be shown having components such as a wireless communication unit 810, an input unit 820, a sensing unit 840, an output unit 850, an interface unit 860, a memory 870, a controller 880, and a power supply unit 890. It is understood that implementing all of the illustrated components is not a requirement. Greater or fewer components may alternatively be implemented.

In more detail, the wireless communication unit 810 may typically include one or more modules which permit communications such as wireless communications between the mobile terminal 800 and a wireless communication system, communications between the mobile terminal 800 and another mobile terminal, or communications between the mobile terminal 800 and an external server. Further, the wireless communication unit 810 may typically include one or more modules which connect the mobile terminal 800 to one or more networks.

The wireless communication unit 810 may include one or more of a broadcast receiving module 811, a mobile communication module 812, a wireless Internet module 813, a short-range communication module 814, and a location information module 815.

The input unit 820 may include a camera 821 or an image input unit for obtaining images or video, a microphone 822, which is one type of audio input device for inputting an audio signal, and a user input unit 823 (for example, a touch key, a mechanical key, and the like) for allowing a user to input information. Data (for example, audio, video, image, and the like) may be obtained by the input unit 820 and may be analyzed and processed according to user commands.

The sensing unit 840 may typically be implemented using one or more sensors configured to sense internal information of the mobile terminal, the surrounding environment of the mobile terminal, user information, and the like. For example, the sensing unit 840 may include at least one of a proximity sensor 841, an illumination sensor 842, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 821), a microphone 822, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like). The mobile terminal disclosed herein may be configured to utilize information obtained from one or more sensors of the sensing unit 140, and combinations thereof.

The output unit 850 may typically be configured to output various types of information, such as audio, video, tactile output, and the like. The output unit 150 may be shown having at least one of a display unit 851, an audio output module 852, a haptic module 853, and an optical output module 854. The display unit 851 may have an inter-layered structure or an integrated structure with a touch sensor so as to implement a touch screen. The touch screen may function as the user input unit 823 which provides an input interface between the mobile terminal 800 and the user and simultaneously provide an output interface between the mobile terminal 800 and a user.

The interface unit 860 serves as an interface with various types of external devices that are coupled to the mobile terminal 800. The interface unit 860, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 800 may perform assorted control functions associated with a connected external device, in response to the external device being connected to the interface unit 860.

The memory 870 is typically implemented to store data to support various functions or features of the mobile terminal 800. For instance, the memory 870 may be configured to store application programs executed in the mobile terminal 800, data or instructions for operations of the mobile terminal 800, and the like. Some of these application programs may be downloaded from an external server via wireless communication. Other application programs may be installed within the mobile terminal 800 at time of manufacturing or shipping, which is typically the case for basic functions of the mobile terminal 800 (for example, receiving a call, placing a call, receiving a message, sending a message, and the like). Application programs may be stored in the memory 870, installed in the mobile terminal 800, and executed by the controller 880 to perform an operation (or function) for the mobile terminal 100.

The controller 880 typically functions to control an overall operation of the mobile terminal 800, in addition to the operations associated with the application programs. The controller 880 may provide or process information or functions appropriate for a user by processing signals, data, information and the like, which are input or output by the aforementioned various components, or activating application programs stored in the memory 870.

Also, the controller 880 may control at least some of the components illustrated in FIG. 8, to execute an application program that have been stored in the memory 870. In addition, the controller 880 may control at least two of those components included in the mobile terminal 800 to activate the application program.

The power supply unit 890 may be configured to receive external power or provide internal power in order to supply appropriate power required for operating elements and components included in the mobile terminal 800. The power supply unit 890 may include a battery, and the battery may be configured to be embedded in the terminal body, or configured to be detachable from the terminal body.

At least part of the components may cooperatively operate to implement an operation, a control or a control method of a mobile terminal according to various embodiments disclosed herein. Also, the operation, the control or the control method of the mobile terminal may be implemented on the mobile terminal by an activation of at least one application program stored in the memory 870.

Hereinafter, description will be given in more detail of the aforementioned components with reference to FIG. 8, prior to describing various embodiments implemented through the mobile terminal 800.

First, regarding the wireless communication unit 810, the broadcast receiving module 811 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules may be utilized in the mobile terminal 800 to facilitate simultaneous reception of two or more broadcast channels, or to support switching among broadcast channels.

The mobile communication module 812 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like).

The wireless signal may include various types of data depending on a voice call signal, a video call signal, or a text / multimedia message transmission / reception.

The wireless Internet module 813 refers to a module for wireless Internet access. This module may be internally or externally coupled to the mobile terminal 800. The wireless Internet module 813 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), High Speed Uplink Packet Access (HSUPA), Long Term Evolution (LTE), LTE-advanced (LTE-A) and the like. The wireless Internet module 813 may transmit/receive data according to one or more of such wireless Internet technologies, and other Internet technologies as well.

When the wireless Internet access is implemented according to, for example, WiBro, HSDPA, HSUPA, GSM, CDMA, WCDMA, LTE, LTE-A and the like, as part of a mobile communication network, the wireless Internet module 813 performs such wireless Internet access. As such, the Internet module 113 may cooperate with, or function as, the mobile communication module 812.

The short-range communication module 814 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 814 in general supports wireless communications between the mobile terminal 800 and a wireless communication system, communications between the mobile terminal 800 and another mobile terminal 800, or communications between the mobile terminal and a network where another mobile terminal 800 (or an external server) is located, via short-range wireless area networks. One example of the wireless area networks is a wireless personal area network.

Here, another mobile terminal (which may be configured similarly to mobile terminal 800) may be a wearable device, for example, a smart watch, a smart glass or a head mounted display (HMD), which is able to exchange data with the mobile terminal 800 (or otherwise cooperate with the mobile terminal 800). The short-range communication module 814 may sense or recognize the wearable device, and permit communication between the wearable device and the mobile terminal 800. In addition, when the sensed wearable device is a device which is authenticated to communicate with the mobile terminal 800, the controller 880, for example, may cause transmission of at least part of data processed in the mobile terminal 800 to the wearable device via the short-range communication module 814. Hence, a user of the wearable device may use the data processed in the mobile terminal 800 on the wearable device. For example, when a call is received in the mobile terminal 800, the user may answer the call using the wearable device. Also, when a message is received in the mobile terminal 800, the user can check the received message using the wearable device.

The location information module 815 is generally configured to detect, calculate, derive or otherwise identify a position (or current position) of the mobile terminal. As an example, the location information module 115 includes a Global Position System (GPS) module, a Wi-Fi module, or both. For example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module. If desired, the location information module 815 may alternatively or additionally function with any of the other modules of the wireless communication unit 810 to obtain data related to the position of the mobile terminal. The location information module 815 is a module used for acquiring the position (or the current position) and may not be limited to a module for directly calculating or acquiring the position of the mobile terminal.

Next, the input unit 820 is for inputting image information (or signal), audio information (or signal), data, or information input from a user. For inputting image information, the mobile terminal 800 may be provided with a plurality of cameras 821. Such cameras 821 may process image frames of still pictures or video obtained by image sensors in a video or image capture mode. The processed image frames can be displayed on the display unit 851 or stored in memory 870. Meanwhile, the cameras 821 disposed in the mobile terminal 800 may be arranged in a matrix configuration to permit a plurality of images having various angles or focal points to be input to the mobile terminal 800. Also, the cameras 821 may be located in a stereoscopic arrangement to acquire left and right images for implementing a stereoscopic image.

The microphone 822 processes an external audio signal into electric audio (sound) data. The processed audio data can be processed in various manners according to a function being executed in the mobile terminal 800. If desired, the microphone 822 may include assorted noise removing algorithms to remove unwanted noise generated in the course of receiving the external audio signal.

The user input unit 823 is a component that permits input by a user. Such user input may enable the controller 880 to control the operation of the mobile terminal 800 to correspond to the input information. The user input unit 823 may include one or more of a mechanical input element (for example, a mechanical key, a button located on a front and/or rear surface or a side surface of the mobile terminal 800, a dome switch, a jog wheel, a jog switch, and the like), or a touch-sensitive input element, among others. As one example, the touch-sensitive input element may be a virtual key, a soft key or a visual key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 840 is generally configured to sense one or more of internal information of the mobile terminal, surrounding environment information of the mobile terminal, user information, or the like, and generate a corresponding sensing signal. The controller 880 may control operations of the mobile terminal 800 or execute data processing, a function or an operation associated with an application program installed in the mobile terminal 800 based on the sensing signal. The sensing unit 840 may be implemented using any of a variety of sensors, some of which will now be described in more detail.

The proximity sensor 841 refers to a sensor to sense presence or absence of an object approaching a surface, or an object located near a surface, by using an electromagnetic field, infrared rays, or the like without a mechanical contact. The proximity sensor 841 may be arranged at an inner region of the mobile terminal covered by the touch screen, or near the touch screen.

The proximity sensor 841, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared ray proximity sensor, and the like. When the touch screen is implemented as a capacitance type, the proximity sensor 841 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 841 may sense proximity touch, and proximity touch patterns (for example, distance, direction, speed, time, position, moving status, and the like). In general, controller 880 processes data corresponding to proximity touches and proximity touch patterns sensed by the proximity sensor 841, and cause output of visual information on the touch screen. In addition, the controller 880 can control the mobile terminal 800 to execute different operations or process different data (or information) according to whether a touch with respect to a point on the touch screen is either a proximity touch or a contact touch.

A touch sensor can sense a touch (or a touch input) applied to the touch screen, such as display unit 851, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 880. Accordingly, the controller 880 may sense which region of the display unit 851 has been touched. Here, the touch controller may be a component separate from the controller 880, the controller 880, and combinations thereof.

Meanwhile, the controller 880 may execute the same or different controls according to a type of touch object that touches the touch screen or a touch key provided in addition to the touch screen. Whether to execute the same or different control according to the object which provides a touch input may be decided based on a current operating state of the mobile terminal 800 or a currently executed application program, for example.

The touch sensor and the proximity sensor may be implemented individually, or in combination, to sense various types of touches. Such touches include a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize location information relating to a touch object using ultrasonic waves. The controller 880, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 821, which has been depicted as a component of the input unit 820, typically includes at least one a camera sensor (CCD, CMOS etc.), a photo sensor (or image sensors), and a laser sensor.

Implementing the camera 821 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors (TRs) at rows and columns to scan content received at the photo sensor using an electrical signal which changes according to the quantity of applied light. Namely, the photo sensor may calculate the coordinates of the physical object according to variation of light to thus obtain location information of the physical object.

The display unit 851 is generally configured to output information processed in the mobile terminal 800. For example, the display unit 851 may display execution screen information of an application program executing at the mobile terminal 800 or user interface (UI) and graphic user interface (GUI) information in response to the execution screen information.

Also, the display unit 851 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image is comprised of a left image (a left eye image) and a right image (a right eye image). According to how left and right images are combined into a 3D stereoscopic image, the 3D stereoscopic imaging method is divided into a top-down method in which left and right images are disposed up and down in a frame, an L-to-R (left-to-right, side by side) method in which left and right images are disposed left and right in a frame, a checker board method in which fragments of left and right images are disposed in a tile form, an interlaced method in which left and right images are alternately disposed by columns and rows, and a time sequential (or frame by frame) method in which left and right images are alternately displayed by time.

Also, as for a 3D thumbnail image, a left image thumbnail and a right image thumbnail are generated from a left image and a right image of the original image frame, respectively, and then combined to generate a single 3D thumbnail image. In general, thumbnail refers to a reduced image or a reduced still image. The thusly generated left image thumbnail and the right image thumbnail are displayed with a horizontal distance difference therebetween by a depth corresponding to the disparity between the left image and the right image on the screen, providing a stereoscopic space sense.

A left image and a right image required for implementing a 3D stereoscopic image may be displayed on the stereoscopic display unit by a stereoscopic processing unit. The stereoscopic processing unit may receive the 3D image (an image of a reference time point and an image of an extension time point), and extract the left image and the right image, or may receive 2D images and change them into a left image and a right image.

The audio output module 852 may receive audio data from the wireless communication unit 810 or output audio data stored in the memory 870 during modes such as a signal reception mode, a call mode, a record mode, a voice recognition mode, a broadcast reception mode, and the like. The audio output module 852 can provide audible output related to a particular function (e.g., a call signal reception sound, a message reception sound, etc.) performed by the mobile terminal 800. The audio output module 852 may also be implemented as a receiver, a speaker, a buzzer, or the like.

A haptic module 853 can be configured to generate various tactile effects that a user feels, perceives, or otherwise experiences. A typical example of a tactile effect generated by the haptic module 853 is vibration. The strength, pattern and the like of the vibration generated by the haptic module 853 can be controlled by user selection or setting by the controller. For example, the haptic module 853 may output different vibrations in a combining manner or a sequential manner.

Besides vibration, the haptic module 853 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 853 can also be implemented to allow the user to feel a tactile effect through a muscle sensation such as the user's fingers or arm, as well as transferring the tactile effect through direct contact. Two or more haptic modules 853 may be provided according to the particular configuration of the mobile terminal 800.

An optical output module 854 can output a signal for indicating an event generation using light of a light source of the mobile terminal 800. Examples of events generated in the mobile terminal 800 may include message reception, call signal reception, a missed call, an alarm, a schedule notice, an email reception, information reception through an application, and the like.

A signal output by the optical output module 854 may be implemented in such a manner that the mobile terminal emits monochromatic light or light with a plurality of colors. The signal output may be terminated as the mobile terminal senses that a user has checked the generated event, for example.

The interface unit 860 serves as an interface for external devices to be connected with the mobile terminal 800. For example, the interface unit 860 can receive data transmitted from an external device, receive power to transfer to elements and components within the mobile terminal 800, or transmit internal data of the mobile terminal 800 to such external device. The interface unit 860 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 800 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 800 via the interface unit 860.

When the mobile terminal 800 is connected with an external cradle, the interface unit 860 can serve as a passage to allow power from the cradle to be supplied to the mobile terminal 800 or may serve as a passage to allow various command signals input by the user from the cradle to be transferred to the mobile terminal therethrough. Various command signals or power input from the cradle may operate as signals for recognizing that the mobile terminal 800 is properly mounted on the cradle.

The memory 870 can store programs to support operations of the controller 880 and store input/output data (for example, phonebook, messages, still images, videos, etc.). The memory 870 may store data related to various patterns of vibrations and audio which are output in response to touch inputs on the touch screen.

The memory 870 may include one or more types of storage mediums including a flash memory type, a hard disk type, a solid state disk (SSD) type, a silicon disk drive (SDD) type, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 800 may also be operated in relation to a network storage device that performs the storage function of the memory 870 over a network, such as the Internet.

The controller 880 may typically control operations relating to application programs and the general operations of the mobile terminal 800. For example, the controller 880 may set or release a lock state for restricting a user from inputting a control command with respect to applications when a status of the mobile terminal meets a preset condition.

The controller 880 can also perform the controlling and processing associated with voice calls, data communications, video calls, and the like, or perform pattern recognition processing to recognize a handwriting input or a picture drawing input performed on the touch screen as characters or images, respectively. In addition, the controller 880 can control one or a combination of those components in order to implement various exemplary embodiments disclosed herein on the mobile terminal 800.

The power supply unit 890 receives external power or provides internal power and supply the appropriate power required for operating respective elements and components included in the wearable device 100 under the control of the controller 880. The power supply unit 890 may include a battery, which is typically rechargeable or be detachably coupled to the terminal body for charging.

The power supply unit 890 may include a connection port. The connection port may be configured as one example of the interface unit 860 to which an external charger for supplying power to recharge the battery is electrically connected.

As another example, the power supply unit 890 may be configured to recharge the battery in a wireless manner without use of the connection port. In this example, the power supply unit 890 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Hereinafter, a description will be given of a route guidance device for guiding a route to be driven by a vehicle in an optimized manner through augmented reality, and a route guidance method thereof, in accordance with an embodiment of the present disclosure.

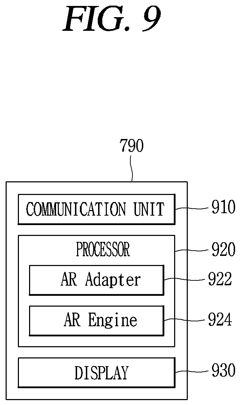

FIG. 9 is a block diagram illustrating a route guidance device in accordance with the present disclosure.

Referring to FIG. 9, a route guidance device 790 according to an embodiment of the present disclosure may include a communication unit 910, a processor 920 capable of controlling the communication unit 910, and a display unit 930 outputting information processed by the processor 920.

The communication unit 910 may be configured to perform communication with an external device or an external component, and may perform wired/wireless communications.

The communication unit 910 may be any one of the communication device 400 of the vehicle 100, the wireless communication unit 810 of the mobile terminal 800, or the interface unit 860 of the mobile terminal 800, or the contents thereof may be applied in the same/like manner.

For example, when the route guidance device 790 is implemented as the controller 170 of the vehicle 100, the communication unit 910 may be the communication device 400 of the vehicle.

As another example, when the route guidance device 790 is implemented as the mobile terminal 100, the communication unit 910 may be the wireless communication unit 810 of the mobile terminal 800 or the interface unit 860 of the mobile terminal 800.

As still another example, when the route guidance device 790 is a separate and independent device implemented to perform communication with the vehicle 100 and/or the mobile terminal 800, the contents of the communication device 400, the wireless communication unit 810 and/or the interface unit 860 may be applied in the same/like manner.

The processor 920 may be configured to control the communication unit 910 and may control operations and functions performed by the route guidance device 790.

The processor 920 may be the controller 170 of the vehicle 100 or the controller 880 of the mobile terminal 800 described above, and the contents thereof may be applied in the same/like manner.

For example, when the route guidance device 790 is implemented as the controller 170 of the vehicle 100, the processor 920 may be the controller 170 of the vehicle 100.

As another example, when the route guidance device 790 is implemented as the mobile terminal 100, the processor 920 may be the controller 880 of the mobile terminal 800.

As still another example, when the route guidance device 790 is a separate and independent device implemented to perform communication with the vehicle 100 and/or the mobile terminal 800, the processor 920 may perform communication with the vehicle and/or the mobile terminal and control at least one of the vehicle and/or the mobile terminal.

The communication unit 910 may receive a first image photographed through a camera.

The camera may be a camera disposed in the route guidance device 790, the camera 310 disposed in the vehicle, or the camera 821 disposed in the mobile terminal.

The processor 920 may receive an image processed through a camera (e.g., a real-time image, a preview image, or a live image) through the communication unit 910.

For example, when the route guidance device 790 is implemented as the mobile terminal 800, the processor 920 may receive the first image photographed through the camera 821 through the communication unit 810 (or the interface unit 860).

The processor 920 may perform calibration for implementing augmented reality on the received first image.

In this specification, an image before calibration is performed is referred to as a first image, and an image after calibration is performed (or calibrated image) is referred to as a second image.

The processor 920 may perform calibration on the first image.

Also, the processor 920 may output a graphic object, which guides the vehicle to travel, by overlapping the graphic object on the calibrated second image.

Outputting a graphic object for guiding traveling of a vehicle on an image captured by a camera in an overlapping manner may mean implementing augmented reality or performing route guidance in augmented reality.

The display unit 930 may output information processed by the processor 920, and may be the display unit 251 provided in the vehicle 100 and/or the display unit 851 of the mobile terminal 800.

For example, the processor 920 may output an image received through a camera and a graphic object for guiding traveling of the vehicle in a manner of overlapping each other

However, the operation and control method of the route guidance device 790 described herein may alternatively be performed by the controller 170 of the vehicle 100. That is, the operation and/or control method performed by the processor 920 of the route guidance device 790 may be performed by the controller 170 of the vehicle 100 or the controller 880 of the mobile terminal 800.

The communication unit 910 is configured to perform communications with the various components described in FIGS. 7 and 8. For example, the communication unit 910 may receive various information provided through a controller area network (CAN). In another example, the communication unit 910 may perform communication with all devices, such as a vehicle, a mobile terminal, a server, and another vehicle, which are capable of performing communication. This may be referred to as Vehicle to everything (V2X) communication. The V2X communication may be defined as a technology of exchanging or sharing information, such as traffic condition and the like, while communicating with road infrastructures and other vehicles during driving.

The communication unit 910 may perform communication with one or more devices disposed in the vehicle 100. The communication unit 810 may include a beam former and a radio frequency IC (RFIC) that controls the beam former, so as to implement 5G communication in a frequency band of 6 GHz or higher. However, when the communication unit 810 implements 5G communication in a frequency band of 6 GHz or less, the beam former and the RFIC are not essential.

The communication unit 910 may receive information related to the driving of the vehicle from most of devices provided in the vehicle 100. The information transmitted from the vehicle 100 to the route guidance device 790 is referred to as 'vehicle driving information (or vehicle travel information)'.

Vehicle driving information includes vehicle information and surrounding information related to the vehicle. Information related to the inside of the vehicle with respect to the frame of the vehicle 100 may be defined as the vehicle information, and information related to the outside of the vehicle may be defined as the surrounding information.

The vehicle information refers to information related to the vehicle itself. For example, the vehicle information may include a driving speed, a driving direction, an acceleration, an angular velocity, a location (GPS), a weight, a number of passengers in the vehicle, a braking force of the vehicle, a maximum braking force, air pressure of each wheel, a centrifugal force applied to the vehicle, a driving mode of the vehicle (autonomous driving mode or manual driving mode), a parking mode of the vehicle (autonomous parting mode, automatic parking mode, manual parking mode), whether or not a user is present in the vehicle, and information associated with the user.

The surrounding information refers to information related to another object located within a predetermined range around the vehicle, and information related to the outside of the vehicle. The surrounding information of the vehicle may be a state of a road surface on which the vehicle is traveling (e.g., a frictional force), the weather, a distance from a front-side (rear-side) vehicle, a relative speed of a front-side (rear-side) vehicle, a curvature of a curve when a driving lane is the curve, information associated with an object existing in a reference region (predetermined region) based on the vehicle, whether or not an object enters (or leaves) the predetermined region, whether or not the user exists near the vehicle, information associated with the user (for example, whether or not the user is an authenticated user), and the like.

The surrounding information may include ambient brightness, temperature, a position of the sun, information related to nearby subject (a person, another vehicle, a sign, etc.), a type of a driving road surface, a landmark, line information, and driving lane information, and information required for an autonomous driving/autonomous parking/automatic parking/manual parking mode.

In addition, the surrounding information may further include a distance from an object existing around the vehicle to the vehicle 100, collision possibility, a type of an object, a parking space for the vehicle, an object for identifying the parking space (for example, a parking line, a string, another vehicle, a wall, etc.), and the like.

The vehicle driving information is not limited to the example described above and may include all information generated from the components provided in the vehicle 100.

The display unit 930 outputs various visual information under the control of the processor 920. The display unit 930 may output visual information to a windshield of a vehicle or a separately provided screen, or output visual information through a panel. The display unit 930 may correspond to the display unit 251 described with reference to FIG. 7.

For example, the visual information output by the display unit 930 is reflected from the windshield or the screen, which generates an effect like the visual information is displayed on the windshield or the screen. A passenger simultaneously views the real world located outside the vehicle 100 and a virtual object displayed on the windshield or the screen, and augmented reality is realized by the display unit 930.

As another example, on the display unit 930, various visual information may be overlapped on an image received in real time through the camera to realize augmented reality under the control of the processor 920.

The processor 920 may control one or more devices disposed in the vehicle 100 using the communication unit 910.

Specifically, the processor 920 may determine whether or not at least one of a plurality of preset conditions is satisfied, based on vehicle driving information received through the communication unit 910.

According to a satisfied condition, the processor 920 may control the one or more electric components in different ways.

In connection with the preset conditions, the processor 90 may detect an occurrence of an event in an electric device provided in the vehicle 100 and/or application, and determine whether the detected event meets a preset condition. At this time, the processor 920 may also detect the occurrence of the event from information received through the communication unit 910.

The application is a concept including a widget, a home launcher, and the like, and refers to all types of programs that can be run on the vehicle 100. Accordingly, the application may be a program that performs various functions, such as a web browser, a video playback, message transmission/reception, schedule management, or application update.

In addition, the application may include at least one of forward collision warning (FCW), blind spot detection (BSD), lane departure warning (LDW), pedestrian detection (PD), Curve Speed Warning (CSW), and turn-by-turn navigation (TBT).

For example, the occurrence of the event may be a missed call, presence of an application to be updated, a message arrival, start on, start off, autonomous travel on/off, pressing of an LCD awake key, an alarm, an incoming call, a missed notification, and the like.

As another example, the occurrence of the event may be a generation of an alert set in the advanced driver assistance system (ADAS), or an execution of a function set in the ADAS. For example, the occurrence of the event may be an occurrence of forward collision warning, an occurrence of a blind spot detection, an occurrence of lane departure warning, an occurrence of lane keeping assist warning, or an execution of autonomous emergency braking.

As another example, the occurrence of the event may also be a change from a forward gear to a reverse gear, an occurrence of an acceleration greater than a predetermined value, an occurrence of a deceleration greater than a predetermined value, a change of a power device from an internal combustion engine to a motor, or a change from the motor to the internal combustion engine.

In addition, even when various ECUs provided in the vehicle 100 perform specific functions, it may be determined as the occurrence of the event.

When a generated event satisfies a preset condition, the processor 920 may control the communication unit 910 to display information corresponding to the satisfied condition on the one or more displays.

The processor 920 receives a front image obtained by photographing the front of the vehicle 100 through a camera. The front image may be received through the communication unit 910 and may be composed of one or more images.

Next, the processor 920 searches for one or more lanes on which the vehicle 100 is scheduled to travel from the front image.

For convenience of description, the one or more lanes on which the vehicle 100 is scheduled to travel are referred to as 'scheduled driving lanes'.

The scheduled driving lanes refer to lanes on which the vehicle 100 is scheduled to travel until a time point t, which is a positive real number, based on a current time point. The time point t may vary depending on a speed of the vehicle 100, a feature of a road on which the vehicle 100 is traveling, and a speed limit set for the road on which the vehicle 100 is traveling.

When the vehicle 100 is autonomously traveling, the scheduled driving lanes refer to lanes on which the vehicle 100 is scheduled to autonomously travel. When the vehicle 100 is traveling manually, the scheduled driving lanes refer to lanes recommended to the driver.

In order to search for the scheduled driving lane, the processor 920 may receive a high-definition map from the route providing device and/or a server, and receive vehicle driving information for specifying the scheduled driving lane.

For example, the processor 920 may receive forward route information for guiding a road, which is located in front of the vehicle 100, in units of lanes.

The forward route information may provide a travel route (driving route) up to a destination for each lane drawn on the road, and thus may be route information complying with the ADASIS standard.

The forward route information may be provided by subdividing a route, on which the vehicle should travel or can travel, into lane units. The forward route information may be information for guiding a driving route to a destination on the lane basis. When the forward route information is displayed on the display mounted on the vehicle 100, a guide line for guiding a lane on which the vehicle 100 can travel may be displayed on a map. In addition, a graphic object indicating the location of the vehicle 100 may be included on at least one lane on which the vehicle 100 is located among a plurality of lanes included in the map.

For example, a road located ahead of the vehicle 100 may have eight lanes, and the scheduled driving lane may be a second lane. In this case, the processor 920 may search for the second lane in the front image.

For another example, a road located ahead of the vehicle 100 may have eight lanes, driving on a second lane is scheduled from a current location to 50 m ahead, and a lane change to a third lane at 50 m ahead may be scheduled. In this case, the processor 920 may search for the second lane up to 50 m ahead and the third lane after 50m ahead in the front image.

Here, searching for a lane means searching for a partial region including the scheduled driving lane in an entire region of the front image. This is to enable the passenger of the vehicle 100 to intuitively recognize the scheduled driving lane by displaying a carpet image for guiding the scheduled driving lane to overlap the searched partial region.

Next, the processor 920 outputs, through the display unit 930, a carpet image for guiding the searched one or more lanes in lane units.

When the display unit 930 is the windshield or window (or screen) of the vehicle, the processor 920 may set an image display region for outputting visual information based on a passenger's eye location and/or gaze.

Furthermore, the processor 920 determines at least one of location, size, and shape of the main carpet image based on the passenger's eye location and/or gaze. At least one of the location, size, and shape of the main carpet image output to the windshield or the screen may vary depending on the passenger's eye location and/or gaze. This is to provide augmented reality in which the real world and a virtual image are exactly consistent with each other.

The main carpet image guides the scheduled driving lane, and may be a transparent image that overlaps the scheduled driving lane and has a predetermined color.

The predetermined color may vary depending on a reference condition. For example, the predetermined color may be a first color in the case of a general road, while the predetermined color may be a second color different from the first color when a road is covered with snow.

The passenger may be provided with route information on the scheduled driving lane, on which the vehicle is to travel autonomously or the driver is to drive the vehicle, through the main carpet image.

Meanwhile, the processor 920 may provide the passenger with at least one sub carpet image, which the passenger can select, in addition to the main carpet image.

On the other hand, the processor 920 controls the communication unit to receive an image photographed in another vehicle existing on a route on which the vehicle is scheduled to travel. Specifically, the image photographed in the another vehicle may be encoded and then transmitted to the vehicle. Accordingly, the image photographed in the another vehicle, received through the communication unit, needs to undergo a separate decoding process. A decoder for decoding may be mounted in the route guidance device 790 or the vehicle 100.

Hereinafter, a description will be given in more detail of a method in which the route guidance device 790 guides a route on which a vehicle is to travel through augmented reality, with reference to the accompanying drawings.

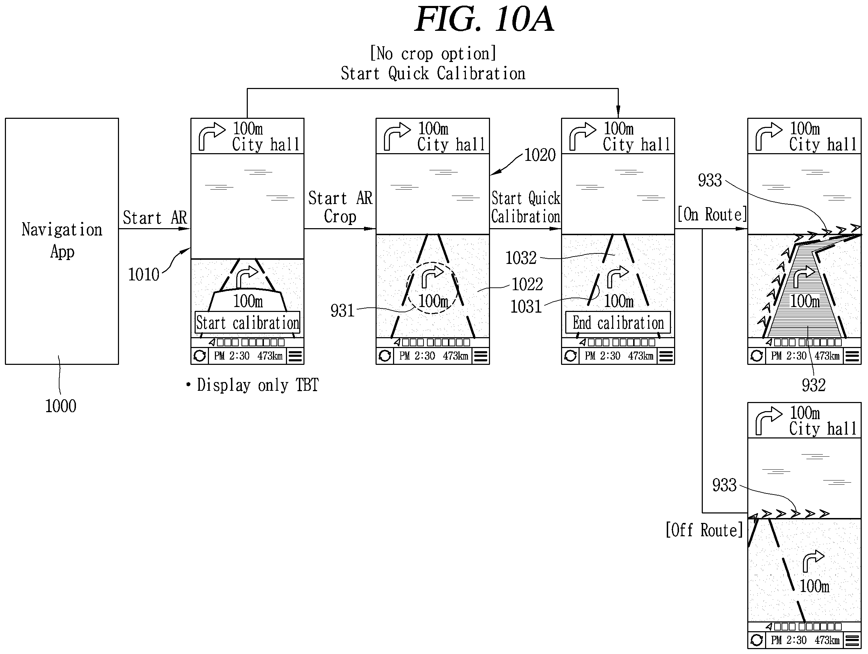

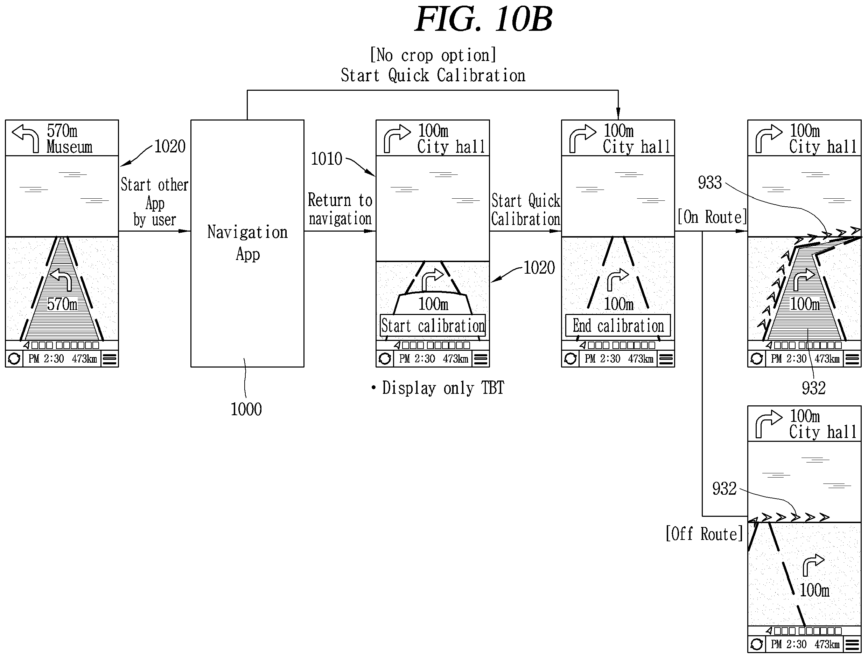

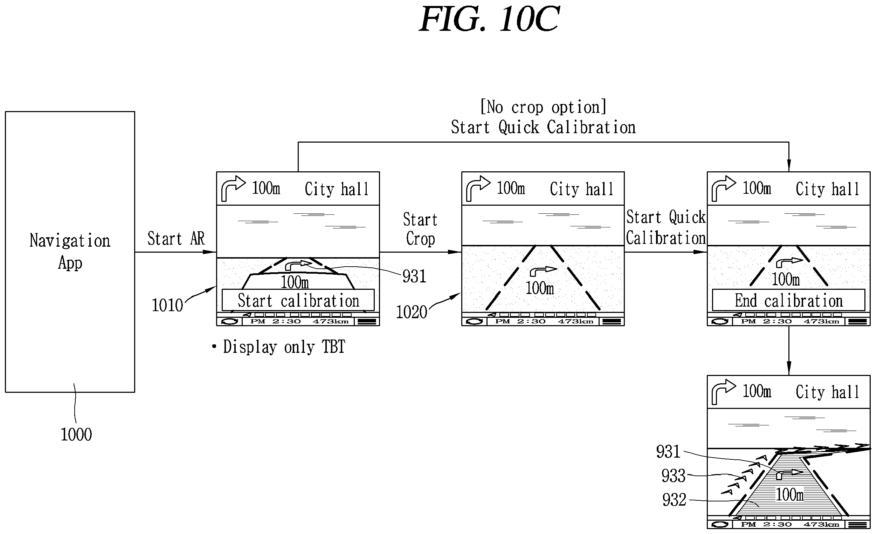

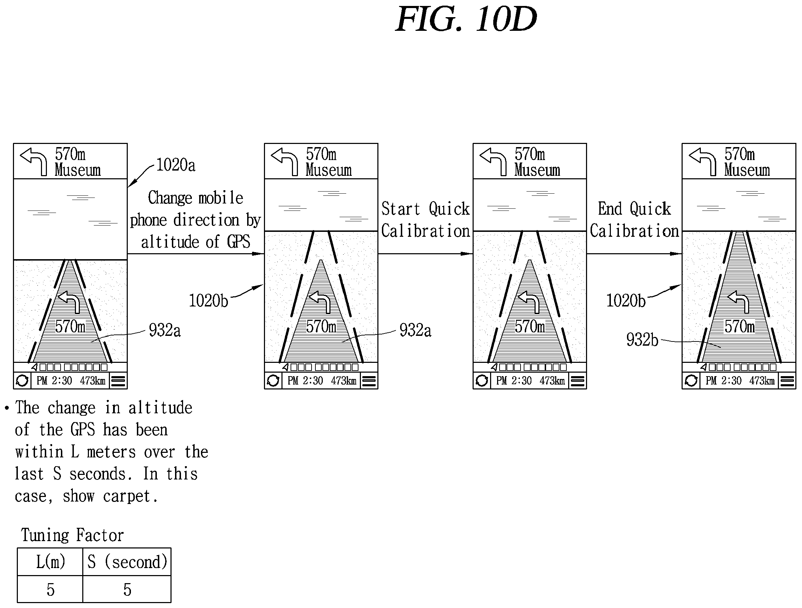

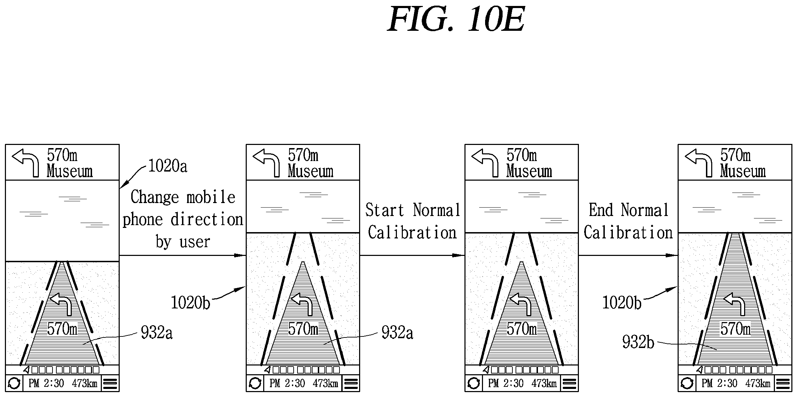

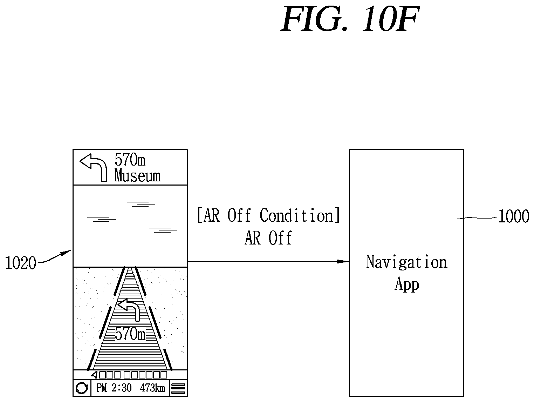

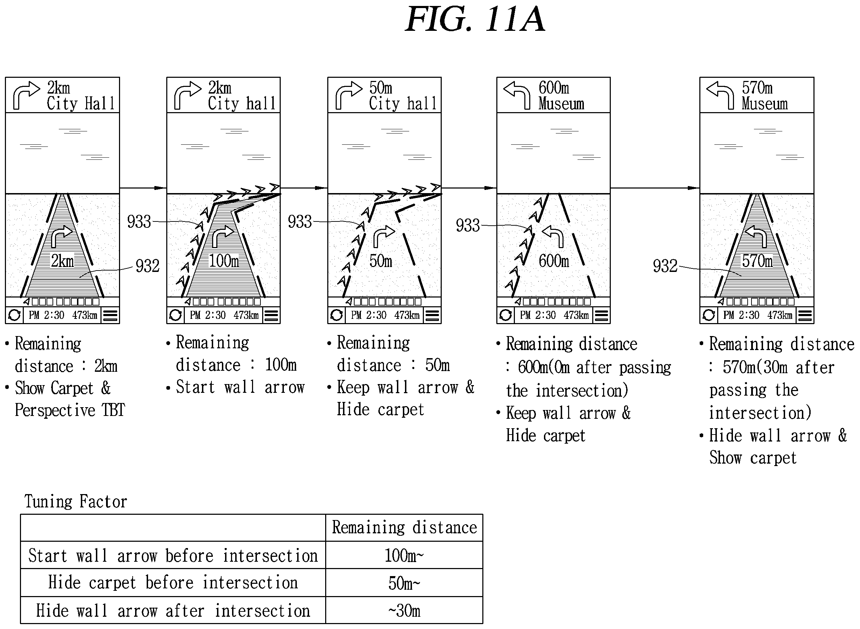

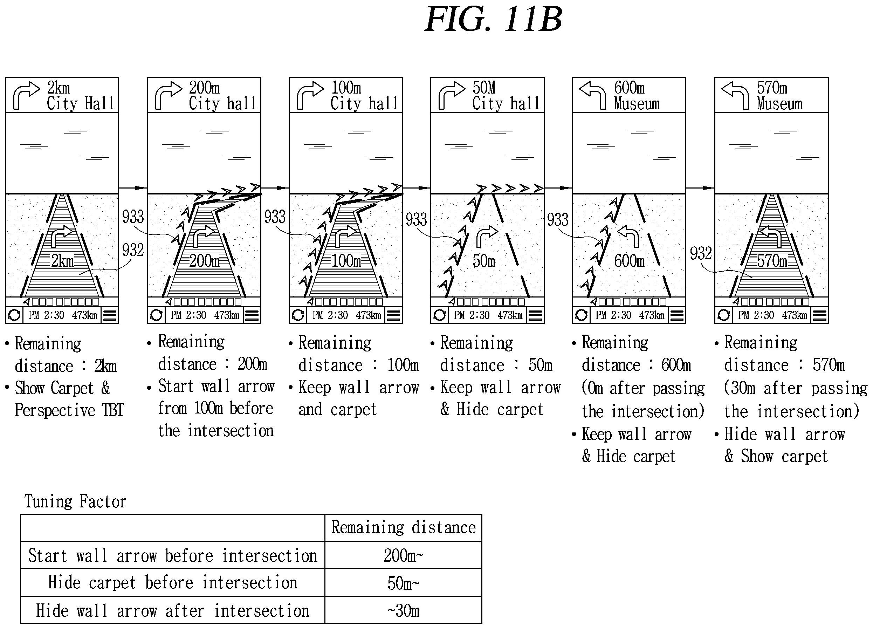

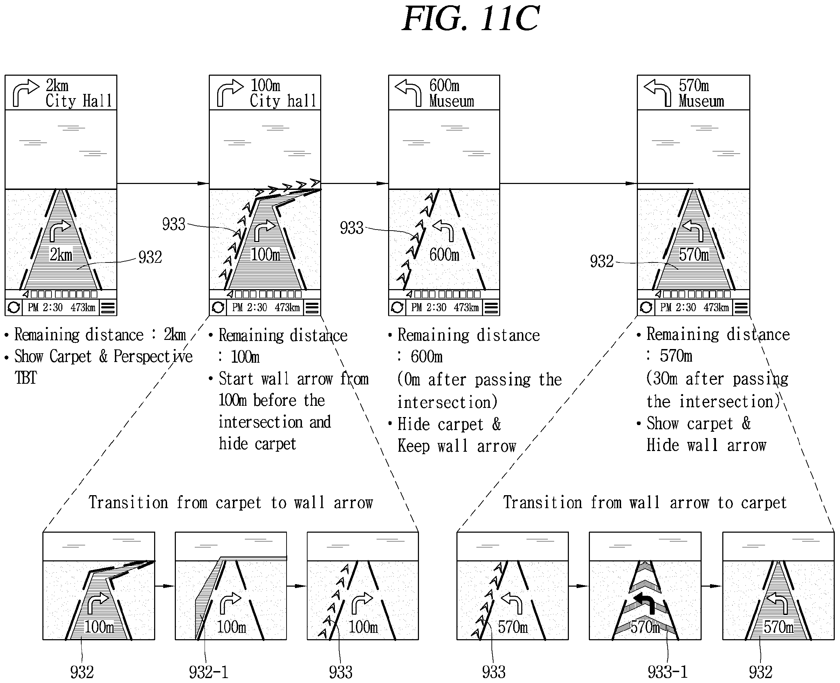

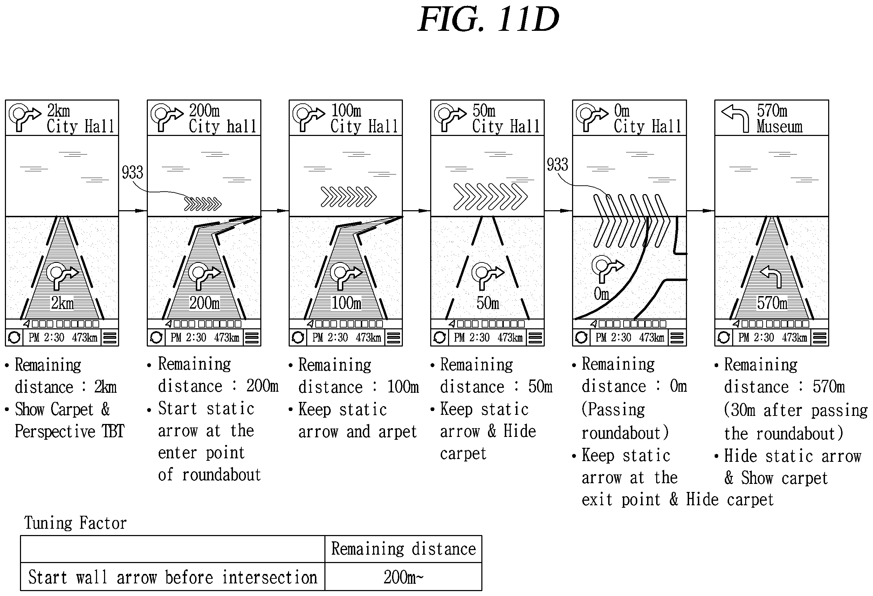

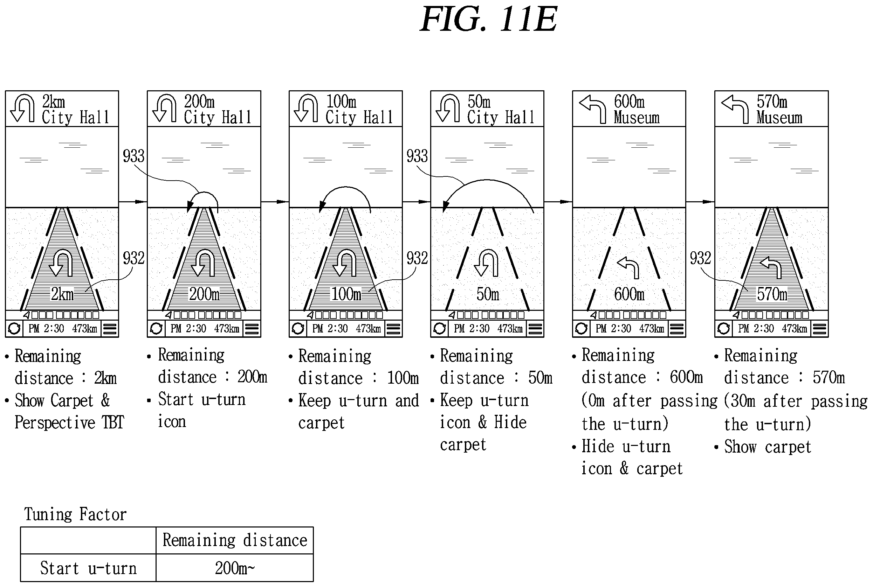

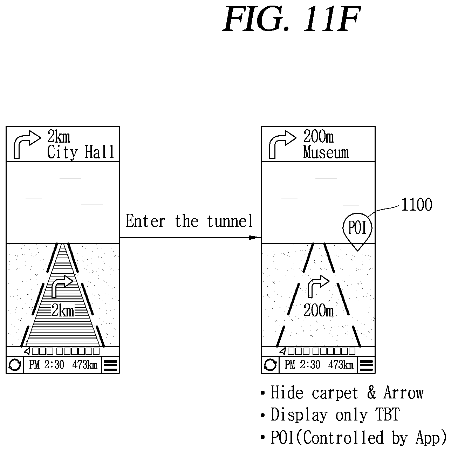

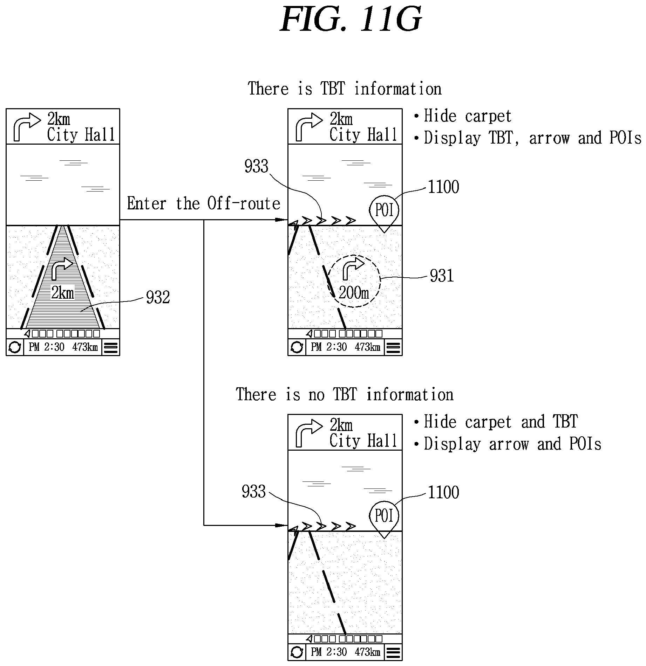

FIGS. 10A, 10B, 10C, 10D, 10E, 10F, 11A, 11B, 11C, 11D, 11E, 11F, and 11G are conceptual views illustrating a route guidance method to which augmented reality is applied, in accordance with one embodiment of the present disclosure.

In this specification, outputting certain information by the processor 920 may mean outputting certain information to the display unit 930 or controlling the display unit 930 to output certain information.

As illustrated in FIG. 10, the processor 920 may enter an augmented reality (AR) mode when a preset condition is satisfied after an application for road guidance (e.g., a navigation App) 1000 is executed.

The preset condition for entering the AR mode may include various conditions such as when a user request is input, when a communication status is good, when a vehicle enters a highway, and when a vehicle is within a predetermined distance before entering/exiting an intersection, and the like, and may be added/changed/set by the user.

Upon entering the AR mode, the processor 920 may receive a first image photographed (captured) through a camera. The first image may be an image photographed in real time.

First, the processor 920 may receive a first image photographed by a camera and perform calibration on the first image. The calibration may mean correcting or compensating for an image to be suitable for implementing augmented reality.

The processor 920 may perform the calibration on the first image, and output a graphic object for guiding driving of the vehicle to overlap a second image which has been calibrated.

In this specification, an image obtained by performing calibration on (calibrating) the first image is referred to as a second image.

As the first image is received in real time, the calibration may be continuously performed in real time. Accordingly, the second image may also be an image photographed in real time.

The processor 920 may output a first graphic object related to driving to the first image 1010 before the calibration is performed.

After the calibration is performed, the processor 920 may output the first graphic object and a second graphic object related to driving to overlap a second image 1020.

The first graphic object or the second graphic object both related to the driving may be, for example, information generated by a navigation application (or navigation system 770) or may be generated by the processor 920 based on route information up to a destination which is received through communication with the navigation application (or the navigation system 770).

The first graphic object may include turn-by-turn information 931 indicating a road to be entered at a predetermined distance ahead, and the second graphic object may include a carpet image 932 that overlaps a road included in the second image and guides a scheduled driving route of the vehicle.

A road is a place that is open to any person or vehicle to pass or move therealong safely and smoothly.

A portion of a road divided by lines 1031 for vehicles to move in a row is referred to as a lane 1032.

A line may refer to a line indicating a boundary as a safety mark between lanes.

As illustrated in FIG. 10A, before calibration is performed, the processor 920 may output only turn-by-turn information (first graphic object) 931, which indicates a road (or direction) to be entered at a predetermined distance ahead, by overlapping it on a first image 1010.

After the calibration is performed, the processor 920 may output not only the first graphic object 931 but also a carpet image (second graphic object) 932, which guides a scheduled driving route of the vehicle, by overlapping them on the lane 1032 included in a calibrated second image 1020.

The lane 1032 that overlaps the carpet image may be a lane on which the vehicle is currently traveling.

As illustrated in FIG. 10A, the processor 920 may output the second graphic object 932 by overlapping it on a lane, on which the vehicle is currently traveling, of a plurality of lanes included in the second image 1020. When it is determined that the vehicle departs from the lane on which the vehicle is currently traveling, the processor 920 may not output the second graphic object (Off route).

Also, as illustrated in FIG. 10A, the first graphic object 931 may be continuously output regardless of whether the vehicle departs from the lane on which the vehicle is currently traveling.

Meanwhile, the processor 920 may perform calibration so that a road area 1022 included in the first image has a predetermined size or larger. For example, the processor 920 may calibrate an image so that an area occupied by a road in the image is more than half.

Referring to FIG. 10B, while the calibrated second image 1020 is being output, when the AR mode is entered again after an execution screen of another application 1000 is displayed, the processor 920 may output the first image again, perform the calibration, and output the second image to the display unit 930.

Referring to FIG. 10C, even when the route guidance device 790 is placed in a landscape mode, the processor 920 may equally output the first image, perform calibration on the first image, and then output the first and second graphic objects to overlap the calibrated second image.

Meanwhile, when a viewing angle of the second image has changed so that a lane included in the second image and a graphic object 932a overlapping the lane do not match each other, the processor 920 may change the graphic object to match the lane based on the second image of which viewing angle has changed (change 932a to 932b).

For example, as illustrated in FIG. 10D, when the vehicle travels near a point where an inclination of a slope changes, the viewing angle of the second image photographed by the camera with respect to the ground changes (i.e., a direction (angle) that the camera photographs an image with respect to the ground changes).

Accordingly, a size of an area occupied by a road in the image photographed by the camera may change and a road and a graphic object which is being output to overlap the lane may not match (overlap) each other.

When the viewing angle of the second image is changed, the processor 920 may change the graphic object 932b (carpet image) to match the lane based on the second image 1020b having the changed viewing angle.

In addition, as illustrated in FIG. 10E, even when the viewing angle of the camera (i.e., the viewing angle of the second image) is changed by the user's manipulation, as described in FIG. 10D, the lane and the graphic object overlapping the lane do not match each other anymore.

Even in this case, the processor 920 may change the graphic object 932b (carpet image) to match the lane based on the second image 1020b whose viewing angle has been changed.

In addition, the processor 920 may end the AR mode, as illustrated in FIG. 10F, when a condition for turning off the AR mode is satisfied while the AR mode is executed.

The condition for turning off the AR mode may include when there is no transmission of GPS data for a predetermined time (for example, when transmission is not performed for two seconds or more), when a transmission delay for a predetermined time or more occurs a specific number of times within a predetermined time (when transmission delay of 1.5 seconds or more occurs three times within 10 seconds), when no transmission of gyro data is performed, when data transmission of an accelerator is not carried out, when no transmission of SD MAP is performed for a predetermined time, when camera image quality is lowered down to a specific Hz or less, and the like.

In this case, the processor 920 may end the AR mode and output an execution screen 1000 of the navigation application, as illustrated in FIG. 10F.

Meanwhile, the processor 920 may output a carpet image, which overlaps the lane included in the second image and guides a scheduled driving route of the vehicle, onto the second image.

The carpet image may overlap a lane, on which the vehicle is currently traveling, in the second image.

The processor 920 may output a wall image for guiding a driving direction onto a lane adjacent to the lane, on which the vehicle is currently traveling, in the second image.

Referring to FIG. 11A, the processor 920 may output the carpet image 932 onto the lane, on which the vehicle is currently traveling, at a predetermined distance (e.g., 100 m) before entering an intersection at which the vehicle has to change a traveling direction (i.e., a point where the vehicle needs to change a traveling direction, such as a right turn, a left turn, or a U-turn rather than going straight at the intersection). In this case, the turn-by-turn information 931 may be continuously output on the calibrated second image 1020.

While the carpet image 932 overlaps the lane on which the vehicle is currently traveling, when the vehicle enters within a predetermined distance before the intersection in a state where the carpet image 932 overlaps the lane on which the vehicle is traveling, the processor 920 may further output a wall image 933 for guiding the traveling direction of the vehicle.

The processor 920 may change the carpet image 932 to the wall image 933 when the vehicle enters within a predetermined distance (e.g., 50 m) before the intersection.

The processor 920 may output the wall image 933 to overlap a lane adjacent to the lane on which the vehicle is currently traveling.

In other words, in the state in which the carpet image 932 is being output together with the wall image 933, when the vehicle enters within a predetermined distance (50 m) before the intersection, the processor 920 may stop the output of the carpet image 932 and output only the wall image 933.

The processor 920 may output the wall image 933 to overlap a lane adjacent to the lane on which the vehicle is currently traveling.

The carpet image 932 may be output to overlap the lane on which the vehicle is currently traveling, and the wall image (or wall arrow) 933 may be displayed on a lane adjacent to the lane on which the vehicle is currently traveling.

For example, when the wall image 933 is a wall image indicating a first direction (right), the wall image 933, as illustrated in second and third drawings of FIG. 11A, may be output to overlap a lane, which is located in a second direction (left) opposite to the first direction, of right and left lanes adjacent to the lane on which the vehicle is currently traveling.

As illustrated in the third drawing of FIG. 11A, when the vehicle enters within the predetermined distance (e.g., 50 m) before the intersection, the processor 930 may output the image 933 on a lane adjacent to the lane on which the vehicle is currently traveling, and may not output the carpet image 932.

When the vehicle changes a direction at the intersection (for example, when turning right at the intersection), the processor 920 may not output the carpet image 932 until before a predetermined distance (e.g., 30 m from the point where the vehicle has changed the direction), and keep outputting the wall image 933.

Thereafter, when the vehicle changes a direction at the intersection, as illustrated in fourth and fifth drawings of FIG. 11A, the processor 920 may transition the wall image 933 to the carpet image 932, and output the carpet image 932 to overlap the lane on which the vehicle is currently traveling.

As illustrated in FIG. 11B, when it is set to output the wall image 933 from a predetermined distance (e.g., 100 m) before the intersection where the vehicle needs to change a direction, the processor 920 may output the wall image 933 to the lane adjacent to the lane, on which the vehicle is currently traveling, from a location (e.g., 200 m ahead) at which the predetermined distance (e.g., 100 m) is recognized on the image, as illustrated in the second drawing. At this time, as illustrated in the second drawing of FIG. 11B, the wall image 933 may be output to overlap the lane from the predetermined distance (100 m).

Hereinafter, the transition process between the carpet image 932 and the wall image 933 will be described in more detail with reference to FIG. 11C.

The processor 920 may output the turn-by-turn information 931 and the carpet image 932 to overlap the lane on which the vehicle is traveling when at least a predetermined distance remains from the intersection where the vehicle is to change a direction.

When the vehicle enters within a predetermined distance (e.g., 100 m) before the intersection, the processor 920 may additionally output the wall image 933 guiding the traveling direction of the vehicle to a lane adjacent to the lane on which the vehicle is traveling or change the carpet image 932 to the wall image 933.

As illustrated in FIG. 11C, when the vehicle enters within the predetermined distance before the intersection, the processor 920 may transition the carpet image 932, which overlaps the lane on which the vehicle is traveling, such that the carpet image 932 is output at a location where the wall image 933 is to be output, and output a transitioned carpet image 932-1 onto a location where the wall image is to be output.

Thereafter, the processor 920 may change the transitioned carpet image 932-1 to the wall image 933.

After the vehicle changes the direction at the intersection, the processor 920 may transition the wall image 933 to be output at the location where the carpet image 932 is to be output, and output the transitioned wall image 933-1 onto the location where the carpet image is to be output (on the lane on which the vehicle is traveling).

Thereafter, the processor 920 may change the transitioned wall image 933-1 to the carpet image 932.

As illustrated in FIGS. 11D and 11E, the processor 920 may enlarge an output size of the wall image 933 as the distance between the vehicle and the intersection decreases.

Thereafter, when the direction change of the vehicle is completed, the processor 920 may not output the wall image 933 guiding the direction change.

As illustrated in FIG. 11F, when the vehicle cannot receive a GPS signal or enters a tunnel where strength of a GPS signal is less than reference strength, the processor 920 may stop the output of the carpet image and output a graphic object 1100 guiding a location for a POI to overlap an image (e.g., second image).

In addition, as illustrated in FIG. 11F, in the state where the carpet image 932 is being output on the lane on which the vehicle is traveling, when the vehicle departs from a scheduled driving route (Off-route), as illustrated above, the processor 920 may output at least one of the turn-by-turn information 931, the wall image 933, and the POI location guide graphic object 1100 to overlap the image.

At this time, the output of the carpet image may be stopped, and the turn-by-turn information 931 may not be output as well.

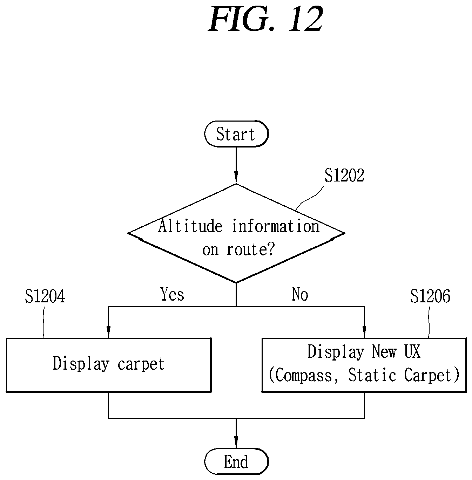

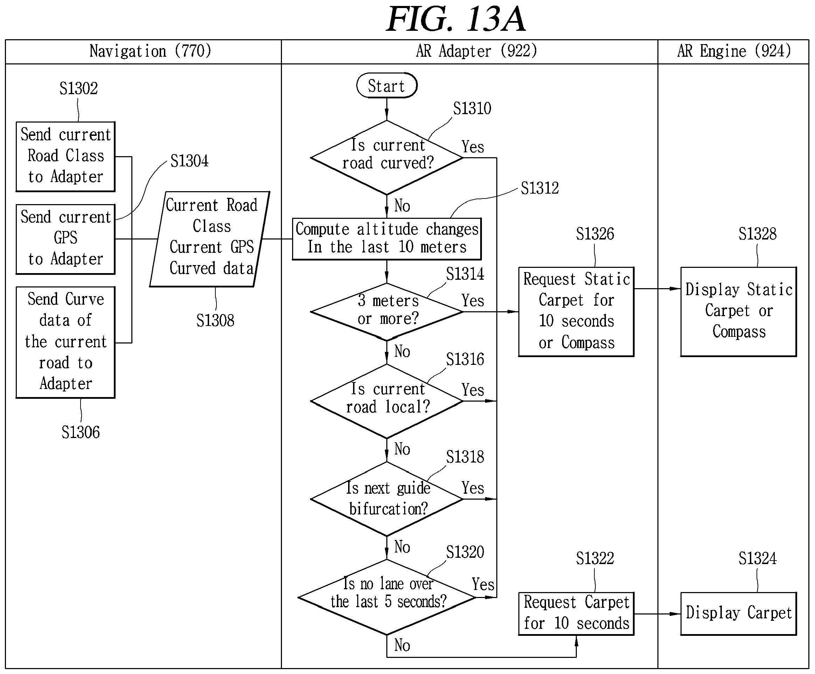

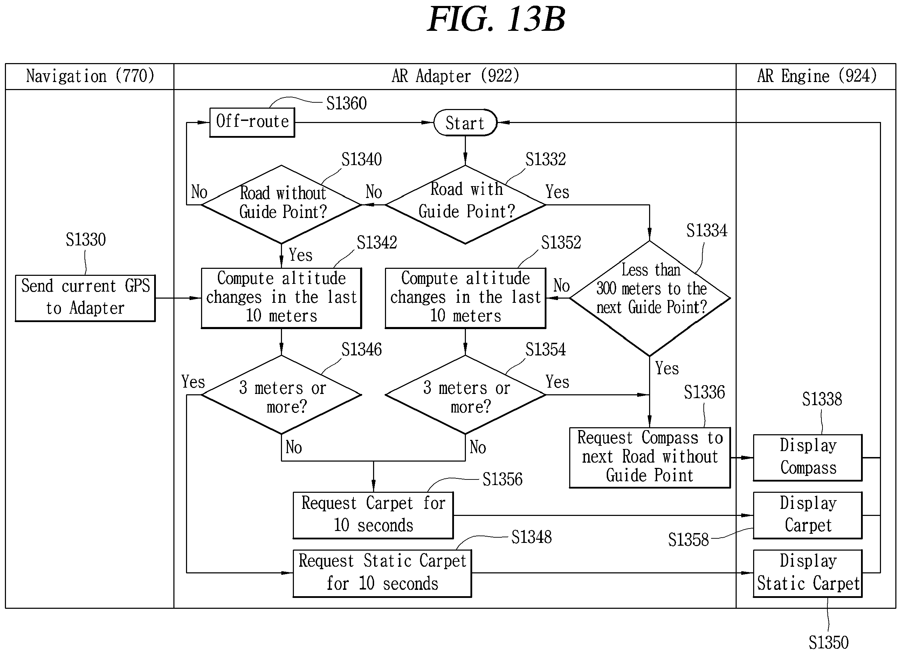

FIGS. 12, 13A, and 13B are flowcharts for explaining a method of determining a type of an image output in augmented reality according to a driving state of a vehicle in accordance with one embodiment of the present disclosure.

Referring to FIG. 12, the processor 920 may determine whether altitude information exists in a route (On route) (S1202). The altitude information may be received from a satellite or an external server through the communication unit 910.

The processor 920 may output a carpet image 932 when the altitude information exists in the route. When it is determined that the altitude information does not exist in the route, a new user interface (UX) may overlap an image to be implemented in augmented reality.

Referring to FIG. 13A, the processor 920 may include an AR adapter 922 and an AR engine 924.

The AR adapter 922 may convert a variety of information, which is received from the navigation application or the navigation system 770 and required for guiding a route, into information (or data) required for implementing augmented reality.

The AR engine 924 may implement route guidance in augmented reality in an image photographed through a camera using the information converted by the AR adapter 922.

Referring to FIG. 13A, the navigation application (or system) 770 may transmit a type (or class) of a current road, a current location of the vehicle (GPS information), and curve data of the current road to the AR adapter (S1302, S1304, S1306, and S1308).

The AR adapter 922 may determine whether the current road is curved (S1310), and when it is not curved, the AR adapter 922 may determine altitude changes in a last predetermined distance (10 m) (S1312).

When the altitude changes in the last predetermined distance are not more than a specific distance (3 m) (S1314), the current road is not local (S1316), there is no next bifurcation (S1318), and there is not a lane over a last predetermined time (5 seconds) (S1320), the AR adapter 922 may request a carpet image from the AR engine for a predetermined time (10 seconds) (S1322).

The AR engine 924 may then output the carpet image to overlap the image (S1324).

On the other hand, if yes in the steps S1310, S1314, S1316, S1318, and S1320, the AR adapter 922 may request the AR engine 924 to output a static carpet image or compass image (S1326).

The AR engine 924 may then output the static carpet image or the compass image to overlap the image (S1328).

Still another embodiment of outputting a compass image, a carpet image, or a static carpet image may be the same as the flowchart illustrated in FIG. 13B.

The navigation application (or system) 770 may transmit current location (current GPS) information to the AR adapter 922.

When a road has a guide point (e.g., an intersection at which a direction change needs to be performed) (S1332) and it is less than a predetermined distance (300 m) to a next guide point (S1334), the AR adapter 922 may request the compass image to a next road without a guide point from the AR engine 924.

In response to the request, the AR engine 924 may output the compass image to overlap the image in augmented reality (S1338).

When there is no guide point (S1332, S1340), the AR adapter 922 may calculate altitude changes in a last predetermined distance (10 m) (S1342). When the altitude changes are greater than a specific distance (3 m), the AR adapter 922 may request the AR engine 924 to output the static carpet image for a predetermined time (S1348).

In response to the request, the AR engine 924 may output the static carpet image to overlap the image (S1350).

The static carpet image may mean a carpet image with a fixed shape, rather than a carpet image whose shape varies depending on a shape of a lane identified in the image.

On the other hand, when there is a guide point on the road but it is not within the predetermined distance to the next guide point (S1332, 1334), the AR adapter 922 may calculate altitude changes in a last predetermined distance (10 m) (S1352).

When the altitude changes are within the specific distance (3 m) (S1346 and S1354), the AR adapter 922 may request the AR engine 924 to output the carpet image for a predetermined time (10 seconds).

In response to the request, the AR engine 924 may output the carpet image 932 to overlap the image such that the carpet image 932 matches the lane on which the vehicle is currently traveling (S1358).

If there is no guide point on a road and also it is not a road without a guide point (for example, when it is impossible to determine whether a guide point exists) (S1332, 1340), the AR adapter 922 may determine that the vehicle has departed from the route (or road) (S1360).

The operations/functions/control methods performed by the AR adapter 922 and the AR engine 924 may be understood as being performed by the processor 920.

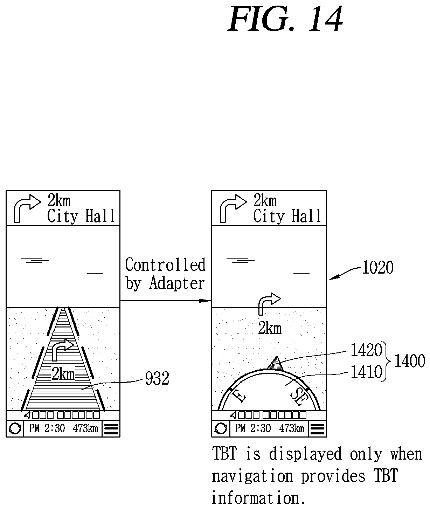

FIGS. 14, 15, 16, 17, 18, 19, 20, 21, 22, and 23 are conceptual views each illustrating a compass image output in augmented reality in accordance with one embodiment of the present disclosure.

As illustrated in the flowcharts of FIGS. 12 to 13B, the processor 920 may perform calibration on the image acquired through the camera, and then display the carpet image 932 guiding a scheduled driving route in an overlapping manner to correspond to a lane on which the vehicle is traveling, thereby realizing augmented reality.

On the other hand, as illustrated in a right drawing of FIG. 14, the processor 920 may output a compass image 1400, which includes a compass object 1410 indicating a direction that the front of the vehicle is heading, onto a calibrated second image 1020. (1020).

The compass image 1400 may include a static carpet image 1420 guiding a direction in which the vehicle should travel at a current location.

In addition, the compass image 1400 may include a compass object 1410 indicating a direction that the front of the vehicle (i.e., corresponding to a direction taken by the camera) points, and a static carpet image 1420 which has a display location changing along a rim of the compass object 1410.

The processor 920 may vary the display location of the static carpet image 1420 along the rim of the compass object 1410.

The static carpet image 1420 may be fixed to a specific shape (for example, a triangular shape) without varying depending on a shape of a road, and guide a direction that the vehicle should travel at the current location while moving along the compass object 1410.

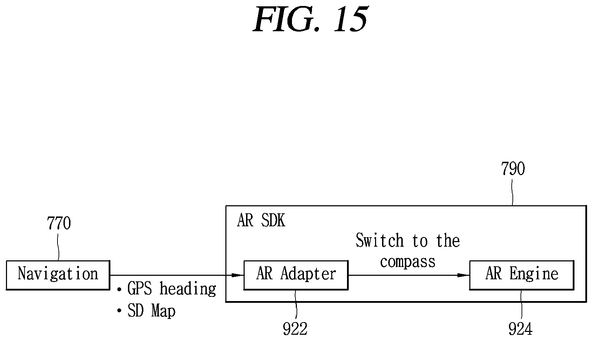

Referring to FIG. 15, the AR adapter 922 of the processor 920 may receive map information (SD MAP) and information (GPS heading) on a direction in which the vehicle is traveling from the navigation application (or navigation system) 770.

The AR adapter 922 may switch the received information into data that is applicable to a compass image, and then transmit the data to the AR engine 924.

The AR engine 924 may generate the compass image 1400 to be output in augmented reality based on the converted data, and output the compass image 1400 to overlap an image in augmented reality.

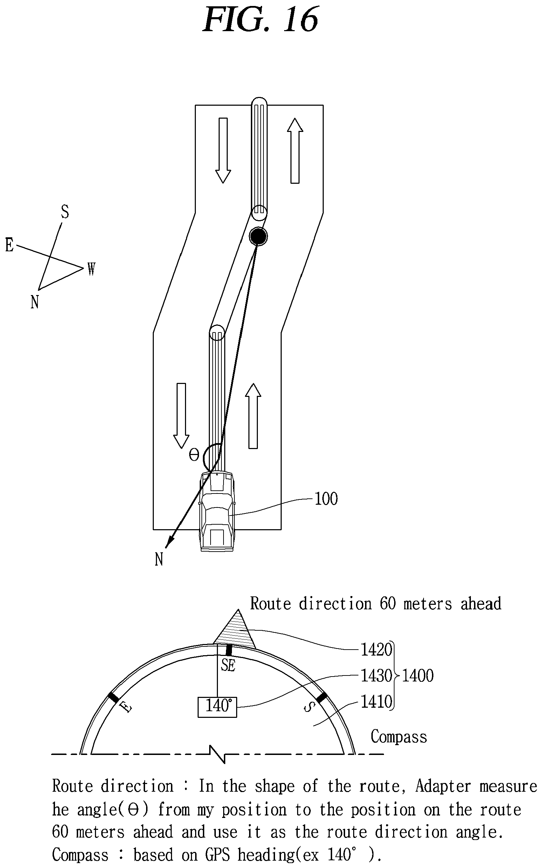

Referring to FIG. 16, the compass image 1400 may include a compass object 1410, direction information 1430 indicating in which direction the vehicle is currently traveling based on north (N), and a static carpet image 1430 guiding a direction in which the vehicle should travel at a current location in order to travel to a next guide point (e.g., an intersection where a direction change is to be performed).

The location at which the static carpet image 1430 is output may be determined and varied depending on an angle at which the next guide point is located with respect to the front of the vehicle.

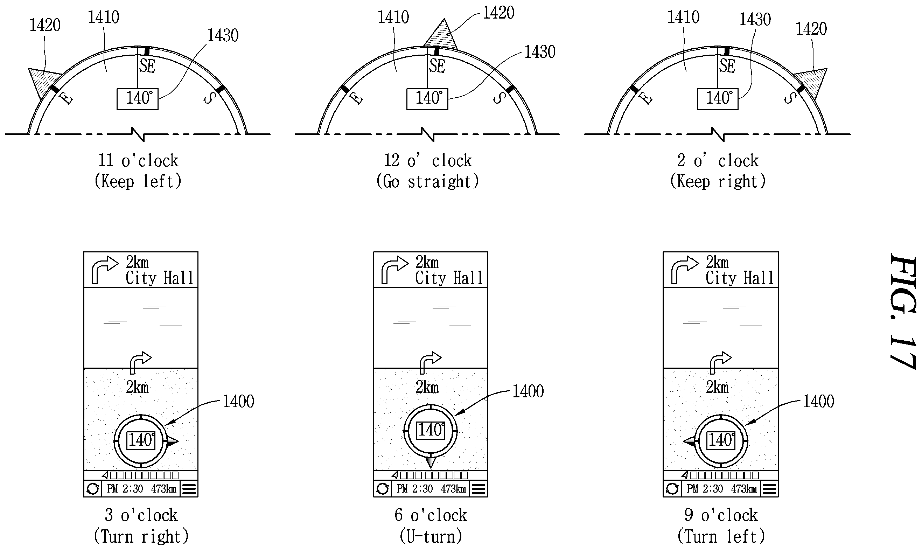

Referring to FIG. 17, the processor 920 may output the compass image 1400 in various ways.

As described above, the static carpet image 1420 may guide the direction in which the vehicle should travel at the current location (i.e., guiding the next guide point at the current location of the vehicle), and its display location may vary along the rim of the compass object 1410.

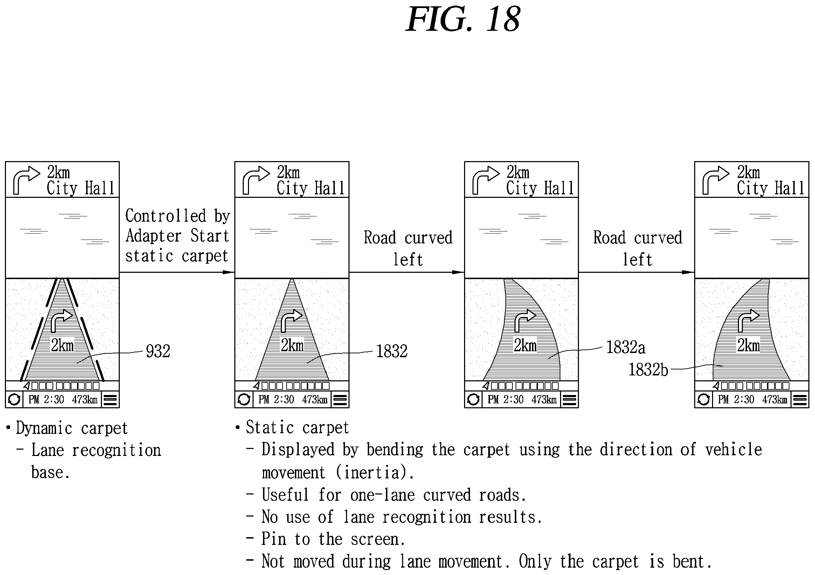

Meanwhile, as illustrated in FIG. 18, the processor 920 may output the static carpet image 1832 in various ways.

For example, the carpet image 932 described above may be a dynamic carpet image. The carpet image 932 may be generated/varied to correspond to a lane on which the vehicle is traveling and output in augmented reality by overlapping the lane on which the vehicle is traveling.

On the other hand, the static carpet image 1832 may be displayed by being bent using a movement direction of the vehicle (or inertia).

This static carpet image may be useful for a one-lane curved road, may not use lane recognition results, may be pinned to a screen, and may only be bent without being moved during a lane movement.

The processor 920 may output at least one of the carpet image 932 for guiding a scheduled driving route of the vehicle or the compass image 1400 for indicating the direction that the vehicle is heading, based on a distance between the vehicle and the intersection at which the vehicle has to change a direction.

In addition, the processor 920 may output one (or at least one) of the carpet image 932 for guiding the scheduled driving route of the vehicle or the compass image 1400 for informing the direction that the front of the vehicle is heading, based on a type of a road on which the vehicle is traveling.

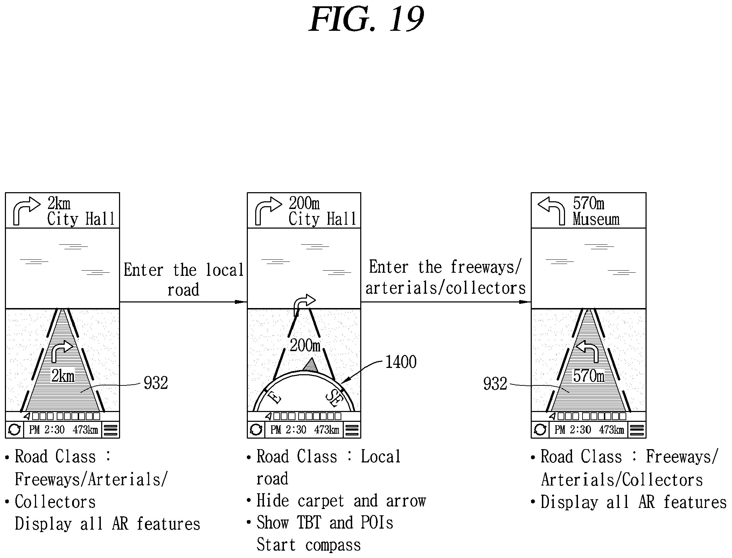

Referring to FIG. 19, when the vehicle is traveling on a preset type of road, such as a highway/arterial road/collector, on which vehicles generally travel straightly, the processor 920 may output the carpet image 932 to overlap an image photographed through the camera, such that the carpet image 932 overlaps a lane on which the vehicle is traveling.

On the other hand, when the road on which the vehicle is traveling is a local road (e.g., downtown, city center, country road, etc.), the processor 920 may output the compass image 1400 instead of the carpet image 932.

When the vehicle enters the preset type of road again, the processor 920 may output the carpet image 932 to overlap the lane on which the vehicle is traveling.

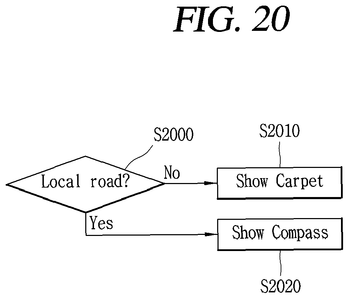

Referring to FIG. 20, when the location of the vehicle is not a local road (i.e., a preset type of road), the processor 920 may overlap the carpet image on the photographed image to implement augmented reality (S2000, S2010). When the location of the vehicle is a local road, the processor 920 may overlap the compass image on the image to implement the augmented reality (S2000, S2020).

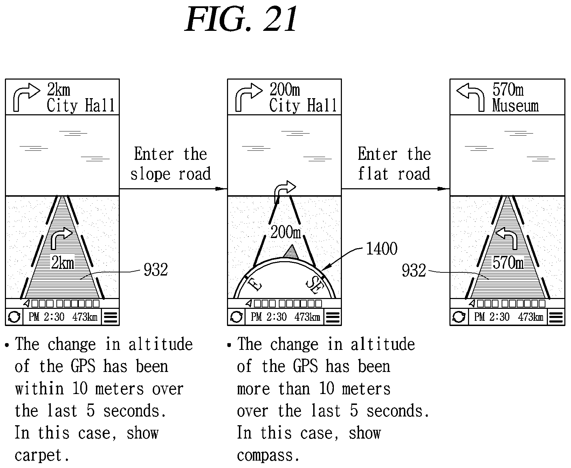

Referring to FIG. 21, the processor 920 may also change the carpet image 932 to the compass image 1400, in response to the vehicle entering a road with a slope.

For example, when GPS altitude change in a past predetermined time (5 seconds) are within a specific distance (10 m), the processor 920 may output the carpet image 932 to overlap a lane on which the vehicle included in the image is traveling.

As another example, when the GPS altitude changes in the last predetermined time (5 seconds) are over the specific distance (10 m), the processor 920 may output the compass image 1400 to overlap an image photographed through the camera.

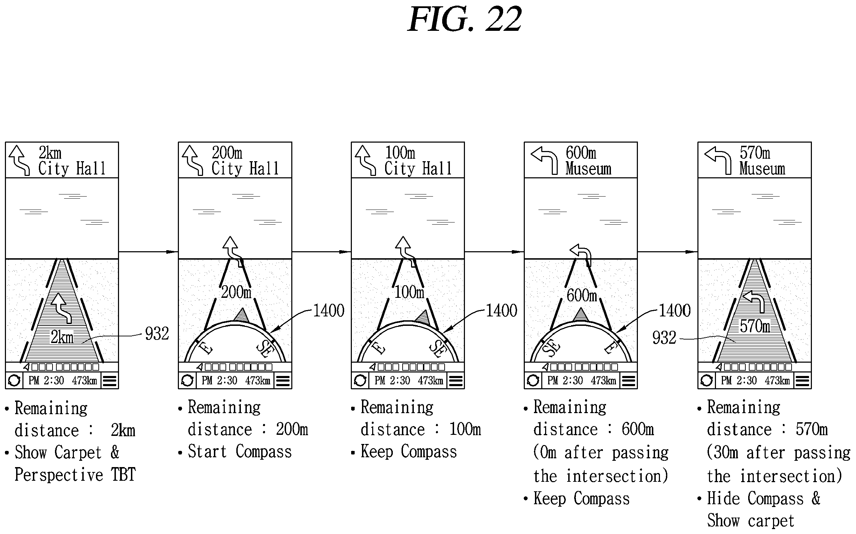

As illustrated in FIG. 22, the processor 920 may output one of the carpet image for guiding a scheduled driving route of the vehicle or the compass image for indicating the direction that the vehicle is heading to overlap the photographed image, based on a distance between the vehicle and the intersection at which the vehicle has to change a direction.

For example, as illustrated in FIG. 22, the processor 920 may not output the carpet image 932 but output the compass image 1400 to overlap the image, when the distance between the vehicle and the intersection (e.g., a guide point) at which a direction change is to be performed is farther than or equal to a predetermined distance (e.g., 200 m).

Thereafter, the processor 920 may keep outputting the compass image 1400 up to a predetermined distance (e.g., 30 m) after the vehicle passes the intersection. Then, after the vehicle has traveled over the predetermined distance (30 m), the processor 920 may stop the output of the compass image 1400 and output the carpet image 932 to overlap the image.

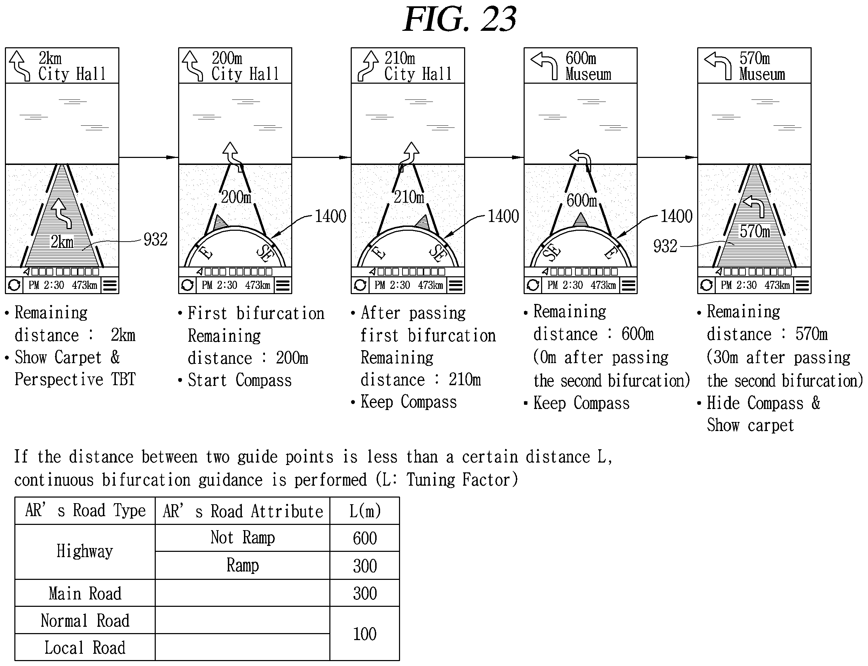

As illustrated in FIG. 23, in case where a plurality of intersections exist and a distance between the plurality of intersections is within a predetermined distance, (e.g., within 300 m), when the vehicle is within a predetermined distance before entering a first intersection of the plurality of intersections, the processor 920 may change the carpet image 932 to the compass image 1400.

Thereafter, the processor 920 may keep outputting the compass image 1400 until the vehicle passes through the last intersection of the plurality of intersections.

Thereafter, the processor 920 may keep outputting the compass image 1400 until the vehicle travels up to a predetermined distance (e.g., 30 m) after passing through the last intersection. After the vehicle travels over the predetermined distance, the processor 920 may stop the output of the compass image 1400 and overlap the carpet image 932 on the lane on which the vehicle included in the image is traveling so as to implement augmented reality.

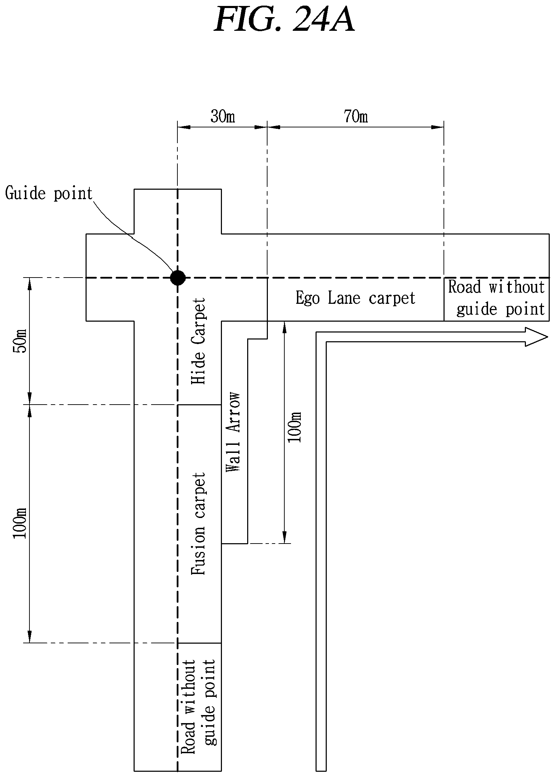

FIGS. 24a, 24b, 25, 26, 27a, and 27b are conceptual views illustrating a route guidance method in accordance with another embodiment of the present disclosure.

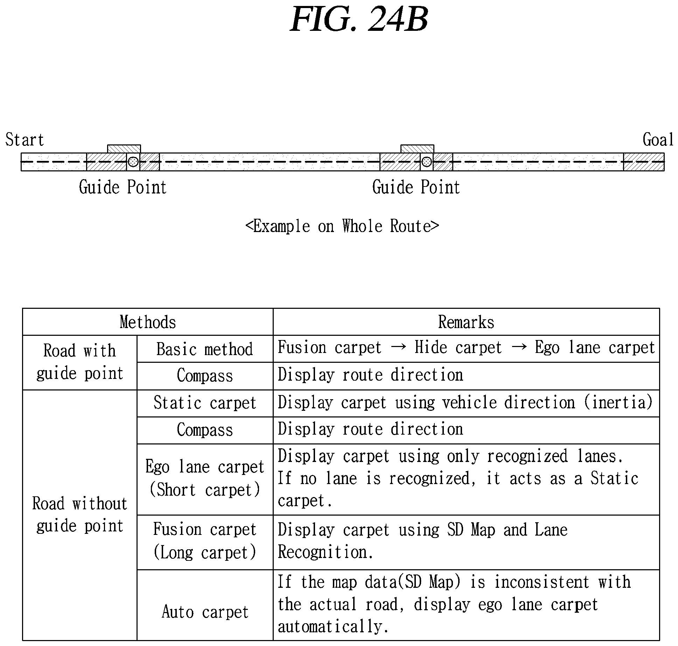

Referring to FIGS. 24A and 24B, in the present disclosure, a graphic object that is output in augmented reality on an image photographed through a camera may be set in various ways according to a distance between the vehicle and an intersection (or guide point) at which a direction change is to be performed.

Referring to FIG. 24A, the processor 920 may output a carpet image, a wall image, and/or a static carpet image when the vehicle enters within a predetermined distance based on a guide point.

The processor 920 may stop outputting at least one of the carpet image, the wall image, and the static carpet image when the vehicle enters within a certain distance from the guide point.

When the vehicle passes the guide point, the processor 920 may output a different type of carpet image or maintain the output of an object, which is being output within the certain distance, by a predetermined distance.

As illustrated in FIG. 24B, the processor 920 may determine a type of graphic object, which is implemented in augmented reality, depending on a case where a guide point (an intersection at which a direction change is to be performed or one point of the intersection) exists within a predetermined distance and a case where the guide point is not within the predetermined distance (road without guide point).

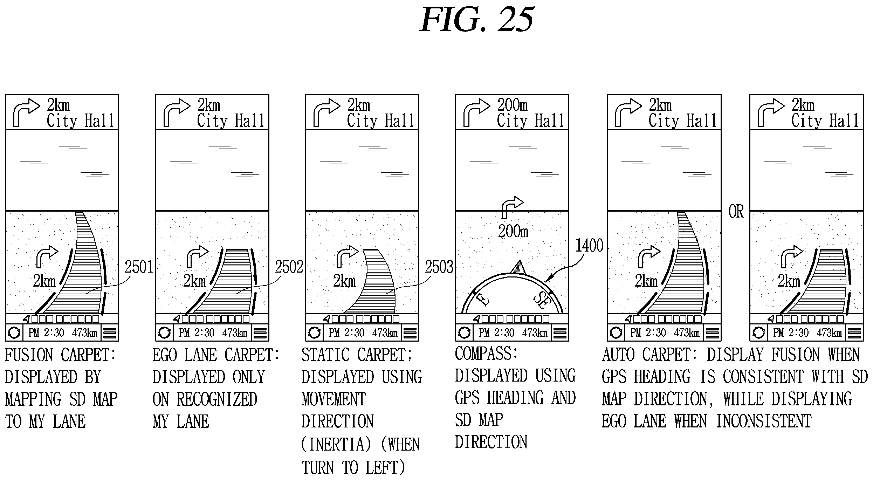

Referring to FIG. 25, the processor 920 may output a fusion carpet image 251, an ego lane carpet image 2502, a static carpet image 2503, a compass image 1400, and the like on an image photographed by a camera in augmented reality.

The fusion carpet image 2501 may be a carpet image (e.g., 932) that is output by being mapped to a lane on which the vehicle is traveling based on a map (SD map), and the ego lane carpet image 2502 may be a carpet image that is output only within a lane identified in an image photographed through a camera.

The static carpet image 2503 may be a carpet image output based on a driving direction (or movement direction) of the vehicle, rather than a carpet image generated/varied based on a map or image. As an example of the static carpet image 2503, a carpet image that is bent to the left may be output when the vehicle is traveling to the left.

The compass image 1400, as described above, may be generated/varied based on a GPS heading (i.e., a direction that the vehicle is heading) received from the navigation application or system 770, and an SD MAP direction (i.e., an angle at which a next guide point is located in the direction the vehicle is currently facing).

The processor 920 may output the fusion carpet image when the GPS heading is consistent with the SD MAP direction, and may output the ego lane carpet image 2502 when they are inconsistent with each other.

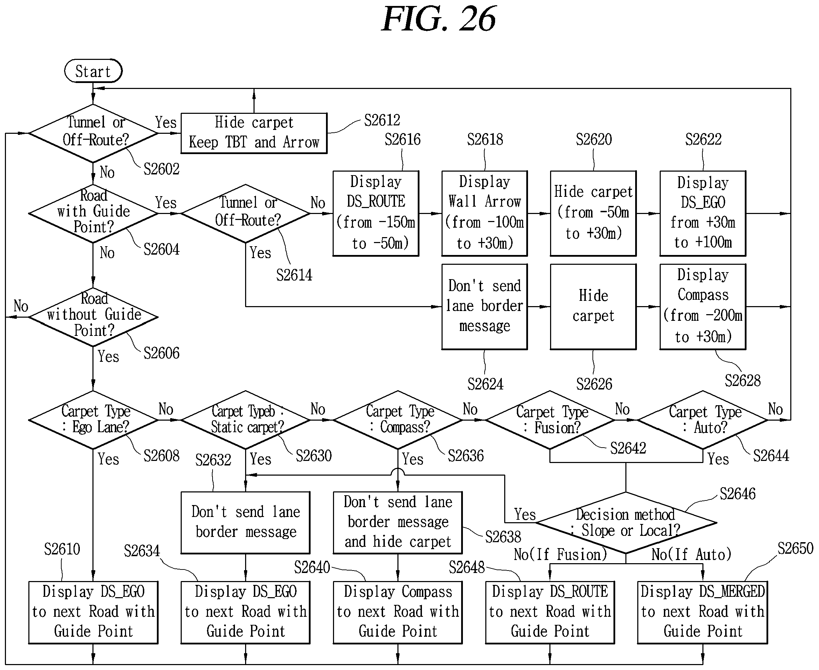

Referring to FIG. 26, a flowchart illustrating one embodiment of outputting various augmented reality graphic objects described above is shown.

The processor 920 may hide the carpet image and output turn-by-turn information when the vehicle is in a tunnel or has departed from the route (or road) (S2602, S2612).

When the vehicle is not in the tunnel or has not departed from the route, a guide point does not exist, and the vehicle is traveling on a road without a guide point, the processor 920 determines a type of graphic object which is being output with being overlapped on an image (S2602, S2604, S2606).

When the ego lane carpet image is being output, the processor 920 may output the ego lane carpet image up to a next road including a guide point (S2608, S2610).

When the static carpet image is being output, the processor 920 may not transmit a lane boundary message and output the ego lane carpet image up to the next road including the guide point (S2632, S2634).

When the compass image is being output, the processor 920 may not transmit a lane boundary message, hide the carpet image, and output the ego lane carpet image up to the next road including the guide point (S2636, S2638, S2640).

When the fusion carpet image or auto carpet image is being output, the processor 920 may determine whether the road on which the vehicle is traveling is sloped or local (S2642, S2644, S2646).

The processor 920 may go to Step S2632 when the road on which the vehicle is traveling is sloped or local.

In the case where the road on which the vehicle is traveling is not sloped or local, the processor 920 may output the fusion carpet image up to the next road including the guide point when a currently-output image is the fusion carpet image, and while outputting the auto carpet image up to the next road including the guide point when the currently-output image is the auto carpet image (S2648, 2650).

When the vehicle is traveling on the road including the guide point, and is not in a tunnel or has not departed from the route, the processor 920 may output the fusion carpet image 932 and then output the wall image 933. When the vehicle is within a certain distance from the guide point, the processor 920 may not output the fusion carpet image, and then output the ego lane carpet image after passing the guide point (S2604, S2614, S2616, S2618, S2620, S2622).

When the vehicle is traveling on the road including the guide point but is not in a tunnel or has not deviated from the route, the processor 920 may not transmit the lane boundary message, hide the carpet image, and output the compass image to overlap the image (S2604, S2614, S2624, S2626, S2628).

DS_EGO, DS_ROUTE, and DS_MERGED are terms used by the AR engine and refer to Ego Lane, Fusion, and Auto, respectively.

In addition, according to the steps of the flowchart illustrated in the drawings, the processor 920 may output various graphic objects on the image in augmented reality.

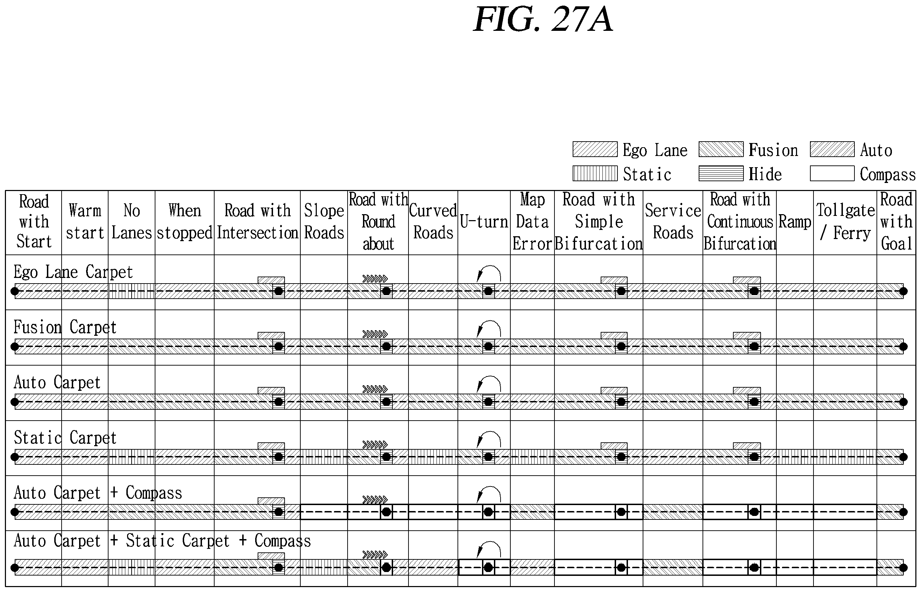

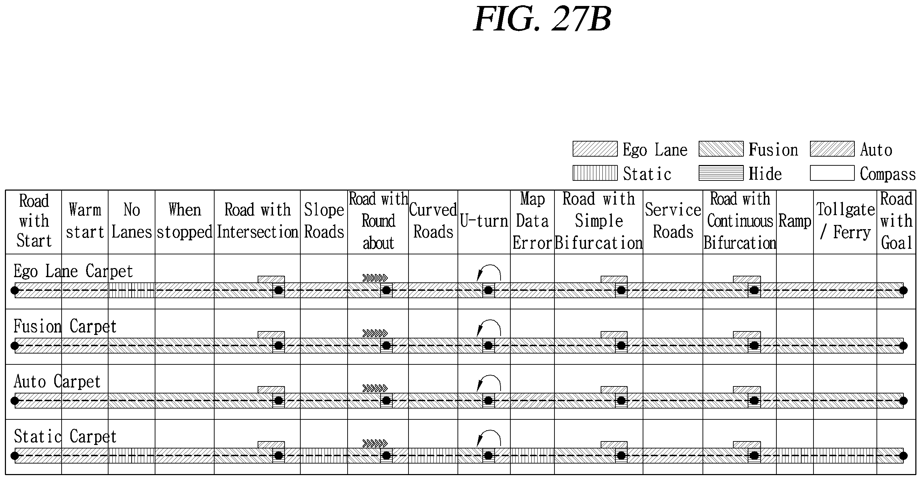

FIGS. 27A and 27B illustrate an embodiment of outputting graphic objects for each situation based on the description given with reference to FIG. 26.

For each situation of FIGS. 27A and 27B, the processor 920 may output a graphic object, which is provided for performing a route guide to be suitable for each situation, on an image photographed through a camera in augmented reality.

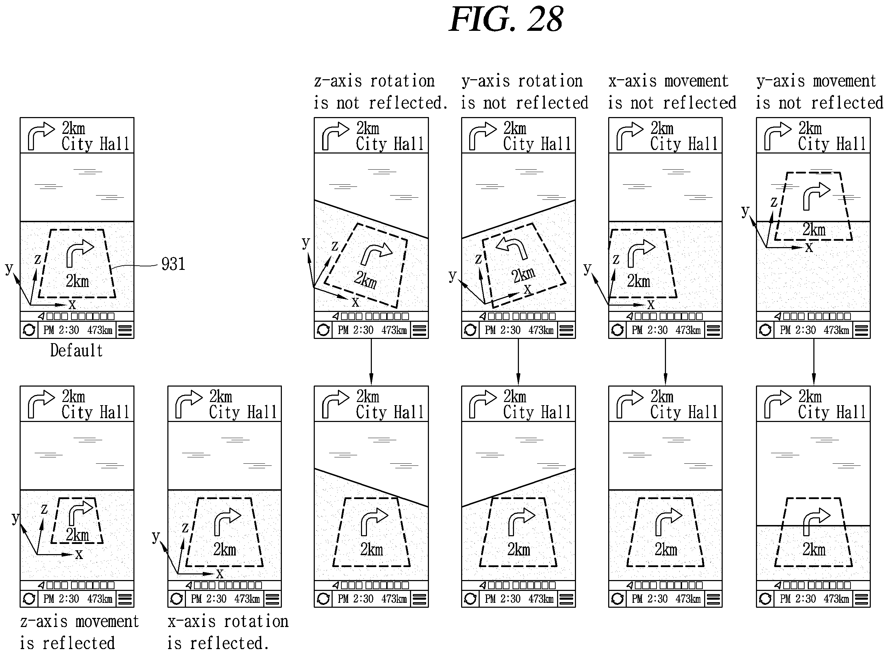

FIG. 28 is a conceptual view illustrating a method of outputting turn-by-turn information in accordance with one embodiment of the present disclosure.

The processor 920 may determine a slope of a road on which the vehicle travels, and determine a slope of a first graphic object 931, which is output to overlap a first image (and a second image) based on the determined slope of the road.

Referring to FIG. 28, the processor 920 may receive information related to a slope of a road on which the vehicle is currently traveling from the vehicle through the communication unit or may receive the information related to the slope of the road on which the vehicle is currently traveling through a camera.

Then, as illustrated in FIG. 28, the processor 920 may tilt a first graphic object 931 corresponding to turn-by-turn information to correspond to the slope information, and output the tilted first graphic object to overlap an image in augmented reality.

Through this configuration, the present disclosure can tilt an augmented reality graphic object to overlap a sloped road, thereby improving quality of the augmented reality.

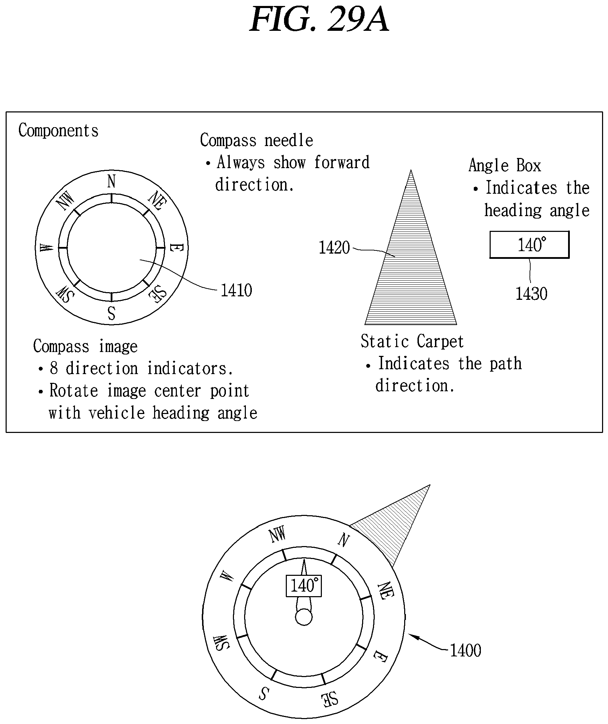

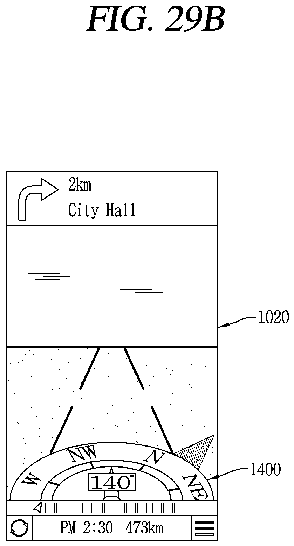

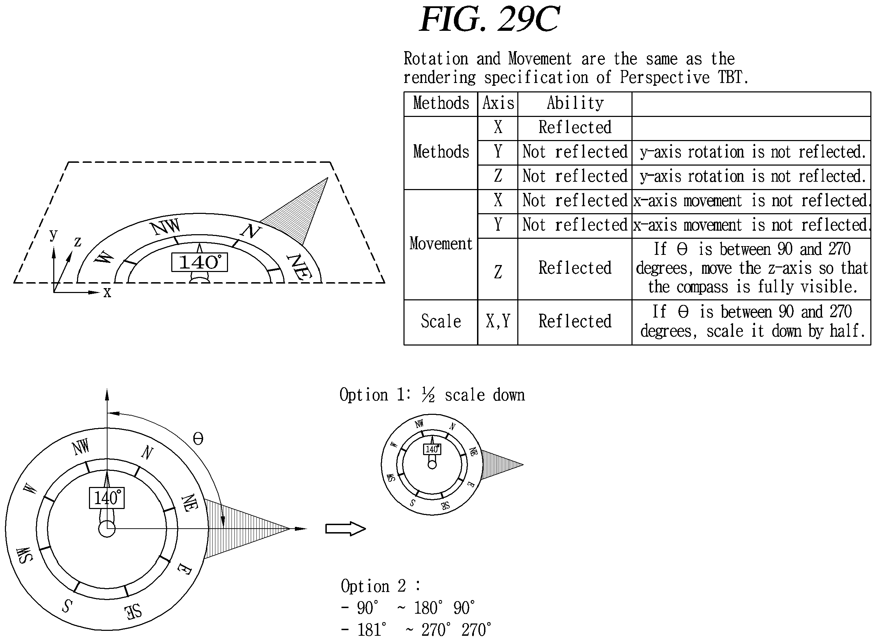

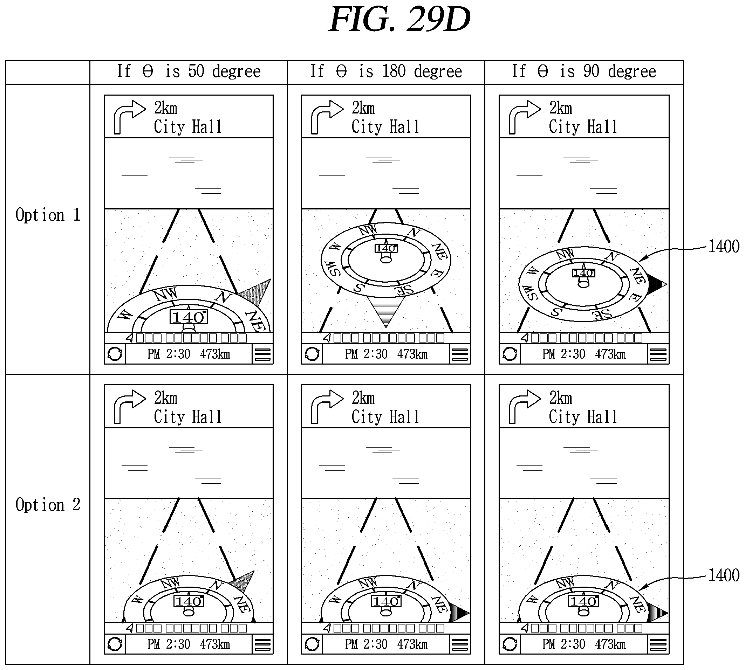

FIGS. 29a, 29b, 29c, and 29d are conceptual views illustrating various methods of outputting a compass image in accordance with one embodiment of the present disclosure.

Referring to FIG. 29A, a compass image 1400, which includes a compass object 1410 indicating a direction that the front of the vehicle is heading, may be output onto a calibrated second image 1020.

The compass image 1400 may include a static carpet image 1420 guiding a direction in which the vehicle should travel at a current location.

In addition, the compass image 1400 may include a compass object 1410 indicating a direction that the front of the vehicle (i.e., corresponding to a direction taken by the camera) is heading, and a static carpet image 1420 which has a display location changing along a rim of the compass object 1410.

The processor 920 may vary a display location of the static carpet image 1420 along the rim of the compass object 1410.

The static carpet image 1420 may be fixed to a specific shape (for example, a triangular shape) without varying depending on a shape of a road, and guide a direction that the vehicle should travel at the current location while moving along the compass object 1410.

As illustrated in FIG. 29B, the processor 920 may output the compass image 1400 to overlap an image photographed through a camera.

The processor 920 may output the compass image in various ways.

For example, as illustrated in FIGS. 29C and 29D, when an angle θ that is formed between a direction that the vehicle is currently heading and a direction (angle) at which the next point is located based on the front of the vehicle exceeds 90 degrees, the processor 920 may reduce a size of the compass image (Option 1), or keep outputting the static carpet image 1430, which guides the direction (angle) at which the next guide point is located based on the front of the vehicle, at a 90-degree location with respect to the front of the vehicle (option 2).

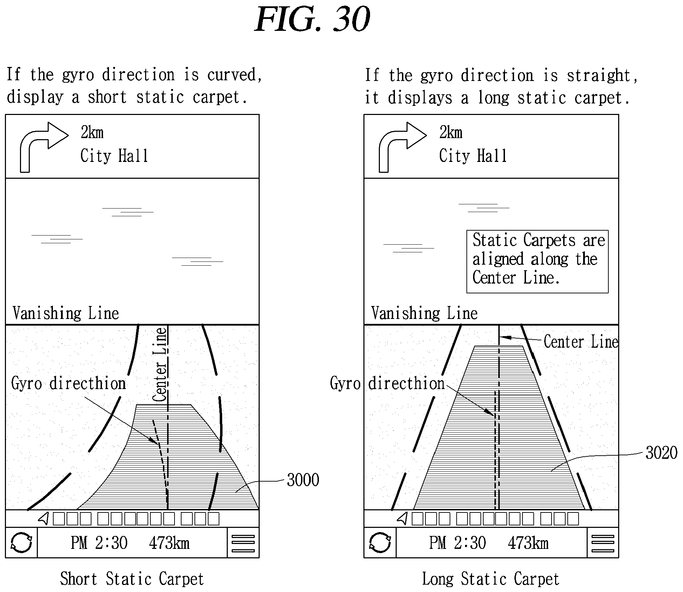

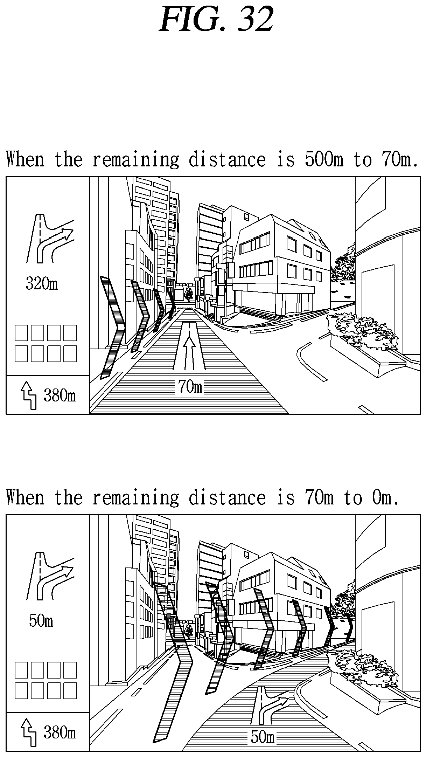

FIGS. 30, 31, and 32 are conceptual views illustrating a route guidance method to which augmented reality is applied according to the present disclosure.

Referring to FIG. 30, the processor 920 may output a short static carpet image 3000 when a gyroscopic direction (e.g., a direction that the vehicle is driven by a steering wheel of the vehicle) is not aligned with a center line (e.g., when the gyroscopic direction is curved), while outputting a long static carpet image 3020 when they match each other (e.g., when the gyroscopic direction is straight).

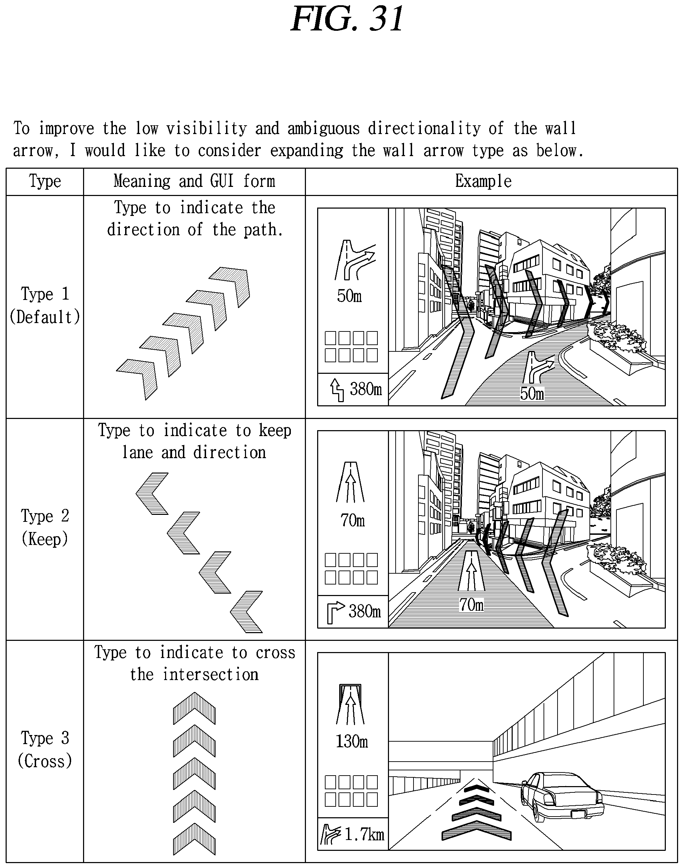

Referring to FIG. 31, the processor 920 may output various types of wall images according to circumstances.

In order to improve low visibility and ambiguous directionality of the wall images (wall arrows), the route guidance device of the present disclosure may output type1 to type3 as illustrated in FIG. 31, namely, may output a type of wall image on a lane adjacent to a lane on which the vehicle is traveling to indicate the direction of the route (type1), output another type of wall image to indicate to keep a lane and a direction (type2), and output still another type of wall image to indicate to cross an intersection (type3).

The route guidance device of the present disclosure can output a carpet image and a wall image on an image photographed through a camera in augmented reality, to provide a route guidance optimized for a user.

Hereinafter, effects of a route guidance device and a route guidance method therefor according to the present disclosure will be described.

According to the present disclosure, a passenger may be provided with route information, on which a vehicle is to travel autonomously or a driver is to drive the vehicle, through a carpet image.

In addition, according to the present disclosure, a passenger can recognize a route on which a vehicle should travel in an optimized way through various types of carpet images.

In addition, according to the present disclosure, a new route guidance interface capable of guiding a driving route of a vehicle can be provided by using a compass image.

The present disclosure can be implemented as computer-readable codes (applications or software) in a program-recorded medium. The method of controlling the autonomous vehicle can be realized by a code stored in a memory or the like.

The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the processor or the controller. Therefore, it should also be understood that the above-described implementations are not limited by any of the details of the foregoing description, unless otherwise specified, but rather should be construed broadly within its scope as defined in the appended claims, Therefore, all changes and modifications that fall within the metes and bounds of the claims, or equivalents of such metes and bounds are therefore intended to be embraced by the appended claims.

## Claims

1. A route guidance device comprising:
a communication unit configured to receive a first image photographed by a camera; and
a processor configured to perform calibration on the first image and output a graphic object for guiding driving of a vehicle to overlap a second image obtained by the calibration.

2. The route guidance device of claim 1, wherein the processor outputs a first graphic object related to driving on the first image before the calibration is performed, and
outputs the first graphic object and a second graphic object related to driving to overlap the second image after the calibration is performed.

3. The route guidance device of claim 2, wherein the first graphic object includes turn-by-turn information indicating a road to enter at a predetermined distance ahead, and
wherein the second graphic object includes a carpet image that overlaps a lane included in the second image and guides a scheduled driving route of the vehicle.

4. The route guidance device of claim 3, wherein the processor outputs the second graphic object to overlap a lane, on which the vehicle is traveling, of a plurality of lanes included in the second image, and
does not output the second graphic object when it is determined that the vehicle departs from the lane on which the vehicle is traveling.

5. The route guidance device of claim 4, wherein the output of the first graphic object is maintained regardless of whether the vehicle departs from the lane on which the vehicle is traveling.

6. The route guidance device of claim 1, wherein the processor performs the calibration so that a road area included in the first image is larger than or equal to a predetermined size.

7. The route guidance device of claim 1, wherein the processor, when a viewing angle of the second image is changed due to driving of the vehicle so that a lane included in the second image and a graphic object overlapped on the lane do not match each other, changes the graphic object to match the lane based on the second image with the changed viewing angle.

8. The route guidance device of claim 1, wherein the processor outputs a carpet image, which overlaps a lane included in the second image and guides a scheduled driving route of the vehicle, on the second image,
wherein the carpet image overlaps a lane, on which the vehicle is traveling in the second image, and
wherein the processor outputs a wall image guiding a driving direction to a lane adjacent to the lane, on which the vehicle is traveling in the second image.

9. The route guidance device of claim 8, wherein the processor outputs the carpet image on the lane on which the vehicle is traveling at a predetermined distance before entering an intersection where the vehicle needs to change a direction, and
changes the carpet image to the wall image and outputs the wall image to overlap a lane adjacent to the lane on which the vehicle is traveling, when the vehicle enters within the predetermined distance based on the intersection.

10. The route guidance device of claim 9, wherein the processor changes the wall image to the carpet image and outputs the carpet image to overlap the lane on which the vehicle is traveling, when the vehicle changes the direction at the intersection.

11. The route guidance device of claim 8, wherein the processor enlarges an output size of the wall image as a distance between the vehicle and the intersection decreases.

12. The route guidance device of claim 1, wherein the processor outputs a compass image to overlap the second image, the compass image including a compass object indicating a direction that the front of the vehicle is heading.

13. The route guidance device of claim 12, wherein the compass image includes a static carpet image for guiding a direction in which the vehicle should travel at a current location.

14. The route guidance device of claim 13, wherein the processor varies a display location of the static carpet image along a rim of the compass object.

15. The route guidance device of claim 1, wherein the processor outputs any one of a carpet image guiding a scheduled driving route of the vehicle or a compass image indicating a direction that the front of the vehicle is heading, based on a distance between the vehicle and the intersection at which the vehicle has to change a direction.

16. The route guidance device of claim 2, wherein the processor determines a slope of a road on which the vehicle is traveling, and
determines a slope of the first graphic object, which is output to overlap the first image, based on the determined slope of the road.

17. A route guidance method comprising:
receiving a first image photographed by a camera; and
performing calibration on the first image and outputting a graphic object for guiding driving of a vehicle to overlap a second image obtained by the calibration.

18. The route guidance device of claim 1, wherein the outputting is configured to
output a first graphic object related to driving on the first image before the calibration is performed, and
output the first graphic object and a second graphic object related to driving to overlap the second image after the calibration is performed.

19. The route guidance device of claim 18, wherein the first graphic object includes turn-by-turn information indicating a road to enter at a predetermined distance ahead, and
wherein the second graphic object includes a carpet image that overlaps a lane included in the second image and guides a scheduled driving route of the vehicle.

20. The route guidance device of claim 19, wherein the outputting is configured to output the second graphic object to overlap a lane, on which the vehicle is traveling, of a plurality of lanes included in the image, and
not to output the second graphic object when it is determined that the vehicle departs from the lane on which the vehicle is traveling.
